# EUROPEAN PATENT SPECIFICATION

(11) **EP 4 225 995 B1**
(45) Date of publication and mention of the grant of the patent: **25.11.2026**
(21) Application number: 21794976.7
(22) Date of filing: 06.10.2021
(51) Int. Cl.: E02D 9/00, E02D 11/00, E21B 41/00, E02D 7/16, E02D 7/00, E21B 7/02

(54) **MACHINE FOR MAKING FOUNDATIONS EQUIPPED WITH SENSORS TO PROTECT PERSON FROM DANGEROUS AREAS OF THE MACHINE**
MASCHINE ZUR HERSTELLUNG VON FUNDAMENTEN, DIE MIT SENSOREN ZUM SCHUTZ VON PERSONEN AUSGESTATTET IST
MACHINE POUR RÉALISER DES FONDATIONS ÉQUIPPÉES DE CAPTEURS POUR PROTÉGER UNE PERSONNE DES ZONES DANGEREUSES DE LA MACHINE

(30) Priority: 07.10.2020 IT 202000023608
(43) Date of publication of application: 16.08.2023
(73) Proprietor: Soilmec SpA, 47522 Cesena (FC) (IT)
(72) Inventor: LAGHI, Matteo, 47121 Forlì (FC) (IT)
(74) Representative: Vitillo, Giuseppe
(86) International application number: PCT/IB2021/059154
(87) International publication number: WO 2022/074576

(56) References cited:
- WO-A1-2014/117874
- WO-A1-2019/079899
- GB-A- 2 479 749
- GB-A- 2 532 272
- US-A1- 2010 031 573

## Description

### Technical field

The present invention relates to a foundation construction machine and a method for controlling such machine, such as generally known from WO 2014/117874 A1.

Such type of machine is configured for working the ground, generally in order to build structural foundation elements, e.g. piles for a new deep foundation or piles for propping up an existing foundation or the support layer of a shallow foundation, or in order to make retaining elements in the ground, e.g. earth retaining walls or waterproofing bulkheads.

### Background art

Machines employed for building foundations are generally called "foundation construction machines". They are typically used in a building yard environment and comprise a base machine, a mast supported by the base machine, and an operating equipment carried by the mast. Such machines are typically controlled by means of commands, i.e. control signals, issued by an operator positioned in a control station mechanically connected to the upper structure and configured for imparting commands for controlling the foundation construction machine, e.g. a cabin or a control board, or by an operator positioned at a distance from the machine, e.g. using a radio control unit or a remote control station. The base machine comprises an upper structure and a self-moving or mobile assembly mechanically connected to each other in a fixed or, via a fifth wheel, rotatable manner; the self-moving or mobile assembly, which is typically an undercarriage, allows the foundation construction machine to move on the ground. The upper structure is generally provided with a structural frame housing several components, e.g. a prime mover, typically a Diesel engine, supplying the necessary power to all the devices of the machine, hydraulic systems, electric systems, and one or more control units, typically PLCs, which, together with suitable input/output modules, sensors, limit switches and electromechanical devices, permit controlling the machine. The upper structure also houses winches adapted to move the operating equipment by means of a rope, typically driven by hydraulic gear motors and braked by overcenter valves and mechanical brakes, and also ballast elements ensuring machine stability during the work. The winches may also have an electrically controlled drive, and therefore may be equipped with an electric motor imparting the rope winding/unwinding motion. The winches may also be driven by a hydraulic unit combined with an electric control signal. The mast (also called "boom" when referring to a crane, i.e. a machine used for foundation construction works only, with no lifting operations) is commonly a structural element having a lattice or boxed construction and a long extension, even in excess of twenty meters, is mechanically connected to the frame on the side opposite to the ballast by means of a kinematic mechanism or a pin hinge to make a swing movement in order to switch from a horizontal position to a substantially vertical position and/or, whenever necessary, in order to change the working radius of the machine, and performs the function of mechanically supporting and also - in some types of foundation construction machines - guiding an operating equipment designed to work the ground according to a given processing technology.

The foundation construction machines known in the art include the so-called "drilling machines", wherein the operating equipment consists of interchangeable equipment and a drill head or a drive head. The interchangeable equipment may be, merely by way of example, a drilling tool (e.g. a bucket, a drill bit, a core sampler) mechanically connected to telescopic rods called "kelly bars", a single "continuous flight auger" or "soil displacement" drilling tool, or else it may be ground consolidation equipment (e.g. of the "jet grouting", "soil mixing", "deep mixing", "Turbojet", "vibro compaction", "stone column", "bottom feed system" types). The operating equipment may also be a vibro-drive equipment, e.g. a hammer or a vibrator, constituting a drive head configured to impart ground driving motion to a sheet pile. The drill head, also referred to as "rotary", is mechanically connected to the mast and can be guidedly made to translate along the mast by means of a rope driven by a winch installed on the upper structure or, as an alternative, by means of a hydraulic cylinder or a rack-type drive system. The drill head is mechanically connected to the interchangeable equipment in order to transfer thereto a rotary motion and a torque of such intensity as to overcome the resistance of the ground and make a hole. The interchangeable equipment may be mechanically associated with the mast in a direct manner by means of a rope of a winch installed on the upper structure, which supports the interchangeable equipment on the pulleys installed at the top of the mast and moves the interchangeable equipment relative to the mast along the longitudinal direction of the hole. Alternatively, the interchangeable equipment may be mechanically associated to the mast in an indirect manner, being moved by the drill head. The drive head may be associated with the mast either directly or indirectly. An additional winch installed on the upper structure, called "service winch", moves an auxiliary rope which, supported by additional pulleys installed at the top of the mast, can be used in order to move foundation elements, such as reinforcement cages, near the hole being made.

The foundation construction machines known in the art also include the so-called "diaphragm wall excavation machines", wherein the operating equipment may be, by way of example, a cutter module, i.e. a frame to which rotary drums equipped with teeth and driven by gear motors are connected in order to make the excavation, or a grab module, i.e. a frame to which mobile clamshells are connected, which are moved by a hydraulic cylinder in order to make the excavation, or else it may be a dynamic compaction mass or a drive head.

In any case, in all known types of foundation construction machines the operating equipment is mechanically associated in a direct manner to the mast, to be moved relative to the mast along the longitudinal direction of the excavation to be made in the ground. From the examples described herein, a person skilled in the art will understand that the definition of foundation construction machine may comprise not only those machine types mentioned above merely by way of non-limiting example, but also other machine types (e.g. also those typically included in the EN16228 product standard series).

The components installed on the upper structure must be subjected to maintenance operations during the service life of the foundation construction machine; by way of example, the mobile parts (rope tensioner, drum, rollers) and the power and control assemblies (gear motor, control valves, sensors) of the winches must be periodically inspected, and the rope needs to be periodically replaced. To this end, the upper structure is provided with raised walkway surfaces in proximity to the components to be serviced, which surfaces can be trodden on by a person. Access thereto is possible through predefined access points in specific locations along the perimeter of the upper structure. The service technician will typically reach such access points by climbing a ladder or steps or, for small-size machines having limited ground clearance, by simply hoisting himself on such access points directly from the ground using available access means (e.g. access ladders).

The winches installed on the upper structure and the walkway surfaces are generally visible from the control station; in some cases, a mirror is available inside the cabin to ensure better vision; in other cases, on bigger machines, the winches can be framed by dedicated closed-circuit cameras, the images of which are continuously shown on a display available to the operator sitting in the cabin. It is thus possible for the operator to monitor the correct winding and unwinding of the rope on the drums of the winches and to visually verify the absence of any people near the walkway surfaces.

A service technician is only allowed to access the walkway surfaces in order to carry out inspection and maintenance work, and the mobile parts of the machine may only be approached when the engine is off. During such operations, the operator checks the position of the technician by means of direct and indirect viewing systems, such as said closed-circuit cameras, and must also keep in audible contact with the technician, e.g. by using transceivers. Should it be necessary to start the machine to make a manoeuver, the operator will first have to make sure that the technician is no longer within the dangerous zone.

In the foundation construction machines known in the art, if a service technician does not comply with the mandatory operating procedures or gains access to the machine when the latter is on, a dangerous situation may arise wherein the technician himself is close to the winches and the latter may suddenly start operating. Complete visibility of the dangerous area will give the operator full control, and the operator will always have to check, before starting the machine, particularly the winches, that nobody is present (and to issue a warning signal, e.g. by sounding the horn, indicating that he intends to start manoeuvring the machine) . Nevertheless, a working man not observing the safety rules and climbing up to the winch area without informing the operator while the machine is in operation might be exposed to a risk that only the operator's attention could avoid.

### Summary of the invention

It is one object of the present invention to provide a foundation construction machine which can reduce the onset of dangerous situations in case a person gains access to the machine, in particular whenever mandatory safety procedures are not complied with and a person approaches dangerous areas while the machine is fully operational.

It is a further object to provide a method for controlling a foundation construction machine.

According to the present invention, these and other objects of the present invention are achieved by means of a foundation construction machine, and a method for controlling it, having the technical features set out in the appended independent claims.

It is understood that the appended claims are an integral part of the technical teachings provided in the following detailed description of the present invention. In particular, the appended dependent claims define some preferred embodiments of the present invention that include some optional technical features.

The following will summarize some of the preferred and advantageous aspects of the present invention.

The use of at least one sensor configured for monitoring a monitoring region in proximity to the sensor itself, so oriented as to monitor a region along a walkway surface and/or a predefined access point, and configured for detecting the presence of a solid body in the monitored region, makes it possible, combined with the monitoring and control activity carried out by the operator through the use of direct and/or indirect vision instruments, to detect when a person enters the dangerous area. The control system connected to such sensor, configured to cause the execution of predetermined functions, advantageously ensures the certain execution of predetermined safety functions conceived as appropriate responses to said dangerous situation, and the automatic execution of such functions advantageously makes them independent of the operator's reaction times. In particular, the predetermined functions have priority over any commands imparted by the operator, ignoring any inadequate manual commands that may not remedy the potential dangerous situation. When a person is detected in dangerous areas, the control system will permit, whether automatically or manually, disabling one or more of such predetermined functions if the automatic stopping of a movement of the machine may create dangerous situations, e.g. should this imply the stopping of highly dynamic manoeuvers. Following the intervention of the sensor, manually starting the machine or a movement of its parts will only be allowed if there is certainty that there are no people in dangerous areas, on condition that preventing the machine from starting or its parts from moving will not generate further unsafe situations. Advantageously, the control system is configured for detecting any faults, thus being even safer and more robust. Preferably, the sensor is a laser scanner, since such sensors are particularly reliable even in the presence of dust, dirt, rain, snow, hail, light, steam and, more generally, in the typical severe conditions of a building yard. Optionally, it is also possible to employ a fixed or removable protection, i.e. a cover, under which the sensor can be arranged in extremely severe environmental conditions. Advantageously, the monitoring region of the sensor can be adjusted and adapted according to installation and functional requirements, so as to ensure the best operability. Optionally, the sensor has a variable spatial resolution, so that it is advantageously possible to set a resolution that will exclude from the detection, and hence from the execution of the predetermined functions, any solid bodies other than a person, such as, for example, snow, hail, soil or birds.

Advantageously, the control signal sent by the control system is transmitted via a dual-channel connection, thus ensuring fault tolerance and cross-monitoring between two channels to reach higher levels of functional safety of the control system compared with a single-channel connection, e.g. up to ISO13849-1 category 3 or 4. In addition, the communication bus may use a communication protocol configured with diagnostic mechanisms, resulting in the advantage that any errors in the transmission of the signal between the sensors and the control system will be detected. Furthermore, the control system may temporarily suspend the detection of the presence of a solid body by the sensor, thus advantageously permitting the temporary override of some sensors when installation/removal operations need to be carried out (e.g. when the rope needs to be replaced). The control system may also carry out an initial memorization of the solid bodies detected by the at least one sensor, being thus advantageously able to store a background scenario that will be considered to be safe, wherein stationary (static) solid bodies may be present within the monitored region in normal conditions, without however representing a dangerous situation (characterized by a body in motion).

Further features and advantages of the present invention will become apparent in light of the following detailed description, provided herein merely as a non-limiting example and referring, in particular, to the annexed drawings as summarized below.

### Brief description of the drawings

Figure 1 is a perspective top view of a foundation construction machine made in accordance with a first embodiment of the present invention.
Figure 2 is a block diagram showing a sensor and a control system of the foundation construction machine represented in Figure 1, according to a preferred configuration of the present invention.
Figure 3 is a perspective top view of a foundation construction machine made in accordance with a construction variant of the first embodiment of the present invention.
Figure 4 is a perspective top view of a foundation construction machine made in accordance with a further construction variant of the first embodiment of the present invention.
Figure 5 is a perspective top view of a foundation construction machine made in accordance with a further construction variant of the first embodiment of the present invention.
Figure 6 is a perspective top view of a foundation construction machine made in accordance with a second embodiment of the present invention.
Figure 7 is a perspective top view of a foundation construction machine made in accordance with a third embodiment of the present invention.
Figures 8-a, 8-b show some details of the foundation construction machine of the present invention, illustrating a preferred installation configuration of a presence sensor and its protective cover.

### Detailed description of the invention

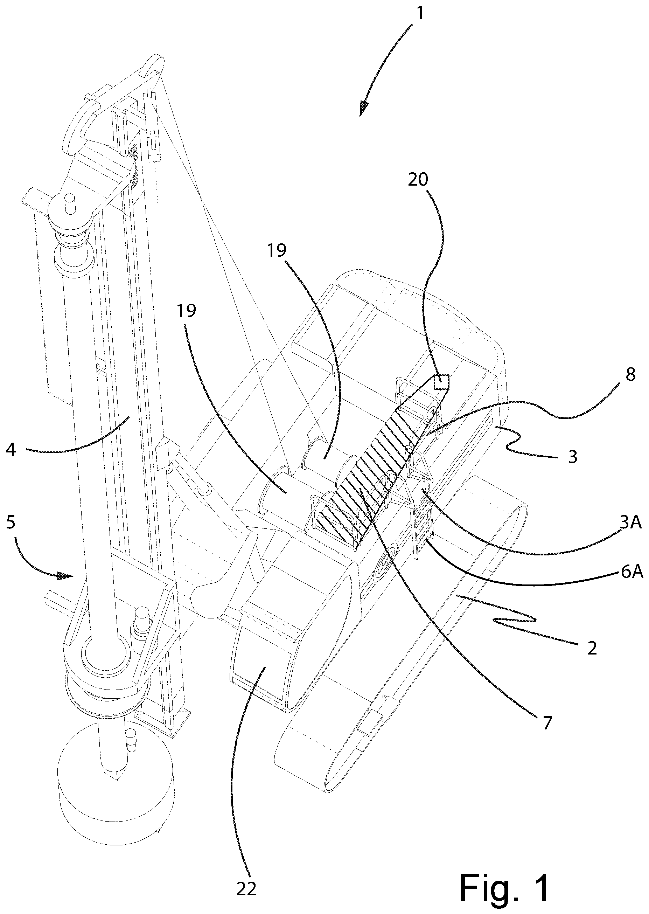

With reference to Figure 1, there is shown a foundation construction machine, designated as a whole as **1,** made in accordance with a first embodiment of the present invention.

Foundation construction machine **1** comprises a self-moving or mobile assembly **2** configured to move on the ground, thus moving said foundation construction machine **1.**

Also, foundation construction machine **1** comprises an upper structure **3** mechanically connected, in a rotatable manner, to self-moving or mobile assembly **2,** and in particular supported by the latter and equipped with at least one predefined access point **3A** configured to allow a person to gain access to upper structure **3.**

Furthermore, foundation construction machine **1** comprises a mast **4** mechanically connected to upper structure **3,** whereon an operating equipment **5** is configured to be mounted in order to drill the ground.
With particular reference to the embodiment shown in Figure 1, upper structure **3** has a walkway surface **7** whereon a person accessing upper structure **3** will be able to stand or walk. In particular, walkway surface **7** is adjacent to predefined access point **3A,** so that a person wanting to reach walkway surface **7** will be compelled to cross predefined access point **3A.** In further construction variants, there may be a plurality of such walkway surfaces **7.**

Advantageously, walkway surface **7** is delimited by one or more railings **8** that prevent falling from considerable heights on big machines, as prescribed by safety regulations. Such walkway surface **7** is arranged on upper structure **3** in such a way as to allow a person to gain access to specific components installed on upper structure **3,** e.g. for maintenance and inspection purposes. In the embodiment illustrated in Figure 1, from walkway surface **7** one can gain access to winches **19,** e.g. a technician having to service them.

Foundation construction machine **1** comprises also a presence sensor **20** integrally mounted to upper structure **3,** so oriented and configured as to monitor a monitoring region integral with upper structure **3** and situated at least above (thus "covering") walkway surface **7** adjacent to predefined access point **3A** that allows access to upper structure **3,** so as to detect the presence of a solid body in such monitoring region. In particular, said monitoring region may coincide with an internal zone located above walkway surface **7** and within the zone delimited by railings **8** (e.g. a substantially empty (i.e. containing only "air" three-dimensional volume or two-dimensional area). It should therefore be understood that the monitoring region monitored by presence sensor **20** is situated at least above (thus "covering") walkway surface **7,** without the latter being necessarily included within the monitoring region. However, the monitoring region may optionally include walkway surface **7.**

Presence sensor **20** is further configured for sending a detection signal representative of the presence of said solid body. Thus, presence sensor **20** can detect the presence of a solid body in said monitoring region and send a detection signal representative of the presence of the solid body.

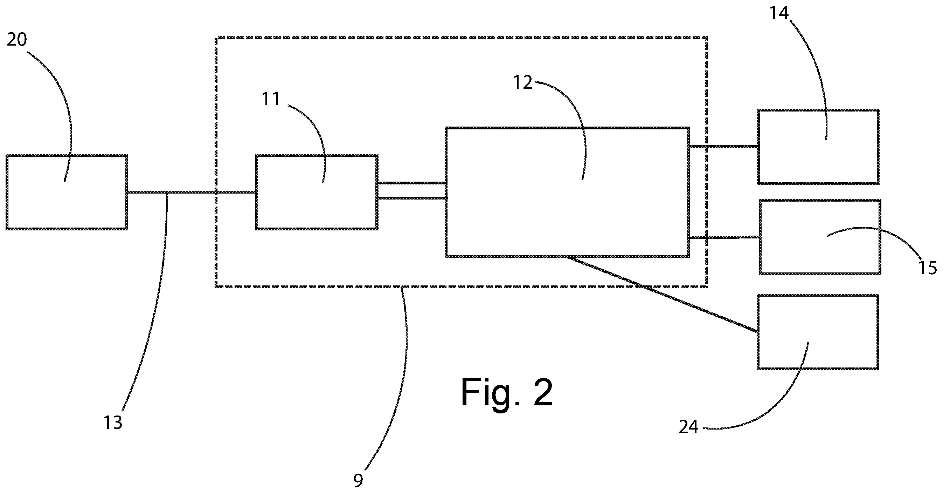

With reference to Figure 2, foundation construction machine **1** comprises a control system **9** operationally connected to presence sensor **20.** Control system **9** is configured for receiving the detection signal and for sending one or more control signals intended to cause said foundation construction machine **1** to execute one or more predetermined functions when the detection signal is representative of the presence of a solid body in proximity to walkway surface **7.**

Due to such technical features, the occurrence of dangerous situations is considerably reduced in case a person undesirably gains access to foundation construction machine **1** through predefined access point **3A,** due to the activation of automatic procedures following the transmission of the control signal.

Merely by way of non-limiting example, the following will describe in greater detail some structural features of foundation construction machine **1** shown in Figure 1.

In the embodiment illustrated in Figure 1, foundation construction machine **1** is, in particular, a so-called "drilling machine" configured for drilling the ground for building foundation piles.

In particular, foundation construction machine **1** comprises at least one winch **19** mounted on upper structure **3,** in particular arranged in a housing formed in said upper structure **3.** Winch **19** is configured for driving and/or moving operating equipment **5** (or at least some parts thereof) or, working as a "service winch", for moving objects useful for the drilling activity (e.g. reinforcement steel for piles being cast). In some variants, e.g. a foundation construction machine obtained from a crane, there may be three winches, and the third winch is used for moving the rear stand, necessary for lifting the lattice arm, in order to switch from an idle position to a working position, e.g. for diaphragm wall excavation. As will be described more in detail below, in the embodiment illustrated in Figure 1 predefined access point **3A** and walkway surface **7** adjacent thereto face a portion of upper structure **3** from which winch **19** is accessible.

In Figure **1** upper structure **3** has a substantially rectangular shape when viewed from above, and therefore has a pair of longer sides, called side panels, and a pair of shorter sides forming the front side (i.e. the side to which mast **4** is typically mechanically connected) and the tail rear side (i.e. the side to which a ballast is typically mechanically connected to ensure machine stability). In the embodiment illustrated in Figure 1, predefined access point **3A** and walkway surface **7** are arranged along one of the side panels of upper structure **3.**

As aforementioned, predefined access point **3A** is configured to allow a person, typically a service technician, to gain access to upper structure **3,** in particular by using access means, e.g. a ladder **6A** or a plurality of steps, sometimes integral with the casings of upper structure **3** itself. Predefined access point **3A** should be understood, in a non-limiting sense, as a surface or a three-dimensional space through which a person can access upper structure **3.** In the illustrated embodiment, the predefined access point is situated substantially along the perimeter of upper structure **3.** Therefore, a person can gain access to predefined access point **3A** by either using a given access means or directly from the ground.

By way of non-limiting example, predefined access point **3A** integral with upper structure **3** may be:
- a surface of upper structure **3** whereon the person will have to rest his feet,
- a space volume that the person will have to cross with his whole body or some parts thereof (e.g. legs, chest, head) in order to gain access to suitable adjacent walkway surfaces,
- a three-dimensional space including, at least partly, the access means (e.g. said ladder **6A);** and
- the surface of the access means itself.

Preferably, predefined access point **3A** may be a volume - in particular, adjacent to the access means (like ladder **6A)** - internally comprising no elements or parts of foundation construction machine 1. For example, such volume is essentially an empty space intended to be crossed by the whole body or by some parts of the body of a person to provide access to one or more adjacent walkway surfaces.

In the illustrated embodiments, e.g. as shown in Figure 1, upper structure **3** particularly comprises a control station **22** (in particular, a cabin) configured for internally receiving an operator, so that the latter can impart commands to foundation construction machine **1.** Control station **22** comprises, in fact, actuation means (not numbered) allowing the operator to control the operation of foundation construction machine 1. Preferably, control station **22** includes signalling means (not numbered), e.g. a display and/or a flasher, configured to warn the operator about particular operating conditions of foundation construction machine **1.** In some advantageous construction variants, the actuation means and the signalling means may be at least partly integrated into one assembly, e.g. forming a touchscreen device configured to allow the operator to control foundation construction machine **1** while at the same time displaying signals related to particular operating conditions of said foundation construction machine.

Preferably, each presence sensor **20** is mounted and oriented on upper structure **3** in a manner such that the respective monitoring region excludes those walkway surfaces through which said control station **22** is accessible. Thus, no presence sensor **20** will detect the presence of any solid bodies passing through a region allowing access to control station **22.** In the embodiment illustrated in Figure 1, the monitoring region of each presence sensor **20** and the associated walkway surface **7** are situated higher than control station **22,** e.g. on top of upper structure **3.**

Although in the embodiment illustrated in Figure 1 predefined access point **3A** and walkway surface **7** are situated along a side panel of upper structure **3,** preferably near control station **22,** in particular the cabin, so that they can be checked by the operator, it is to be understood that in other embodiments and construction variants said predefined access point **3A** and said walkway surface **7** may be situated in different positions along the perimeter of upper structure **3.** For example, predefined access point **3A** and walkway surface **7** may be situated on the other side panel or on the front side or on the rear side.

Furthermore, although the embodiment illustrated in Figure 1 shows a single predefined access point **3A** and a single walkway surface **7,** in further embodiments and construction variants upper structure **3** may include a plurality of predefined access points and/or a plurality of walkway surfaces. Such plurality of predefined access points and/or such walkway surfaces may be located, for example, along the same side panel, along both side panels or, more in general, along one or more sections of the perimeter of upper structure **3.** In particular, the predefined access points may be adjacent to the same walkway surface **7,** or the walkway surfaces may be adjacent to the same predefined access point. At any rate, for brevity and simplicity, the first embodiment shown in Figure 1 will be described with reference to the single predefined access point **3A** and the single walkway surface **7** illustrated therein; nevertheless, it is to be understood that the following description is also applicable to one or more other predefined access points and/or one or more adjacent walkway surfaces that may be included in other embodiments or construction variants of the present invention.

In the embodiment of Figure 1, presence sensor **20** is shown mounted to the Diesel engine compartment, e.g. on top of the latter, by means of a support bracket. However, in further embodiments and construction variants, presence sensor **20** may, without distinction, be mounted to any other element integrally fixed to upper structure **3,** e.g. casings, walkway surface **7,** handrail, railing **8,** cabin **22** or support brackets. Optionally, presence sensor **20** is mounted to one of railings **8** delimiting walkway surface **7** or directly on walkway surface **7.** After properly orienting presence sensor **20** and setting the characteristic parameters of its field of view (e.g. depth and angular width, or geometric outline with variable shape and depth depending on the angular position), the monitoring region may preferably coincide with the internal surface within the area delimited by railings **8** and above walkway surface **7** (e.g. an empty space or a surface containing only "air" which, for example, lies 50-700mm above walkway surface **7).** In any case, any persons standing at a lower level, i.e. at the level where cabin **22** or, in general, a control station of foundation construction machine **1** can be accessed by walking on the track or on suitable lateral walkway surfaces, will not trigger the predetermined functions because they will not be detected by presence sensor **20.** Vice versa, any persons climbing up to upper structure **3** from predefined access point **3A** and accessing walkway surface **7** adjacent thereto will trigger the predetermined functions because they will be detected by presence sensor **20.** Preferably, also a person accessing walkway surface **7** from the inside will be detected by presence sensor **20.**

The following will describe, by way of example, some optional or preferred technical details of presence sensor **20.**

In particular, presence sensor **20** is configured for detecting and/or receiving a signal (e.g. an electromagnetic radiation) within its field of view, for the purpose of monitoring the monitoring region integral with upper structure **3** within such field of view; preferably, said monitoring region coincides with the whole field of view of presence sensor **20,** but it may nonetheless be freely configured to be limited to a part of the whole field of view of the sensor. By means of said signal, presence sensor **20** is configured for detecting the presence of a solid body, e.g. a person (such as a service technician) within such monitoring region. Presence sensor **20** is further configured for sending a detection signal representative of the presence of said body. Preferably, the field of view of sensor **20,** which may optionally be adjustable, has at least one of the following properties:
- a depth of field, i.e. a distance of view (optionally adjustable), of at least one meter (e.g. up to 4 meters),
- a horizontal field angle (optionally adjustable), i.e. the angular view aperture in a horizontal plane, of at least 30° (e.g. up to 275°).
Optionally, the field of view has a variable spatial resolution, i.e. it is possible to set a different minimum size of the solid body, below which presence sensor **20** will not detect the presence of said body. The field of view of the sensor, and hence the monitoring region, may be either two-dimensional or three-dimensional and, in this latter case, the field of view will also have a vertical field angle, i.e. the angular view aperture in a plane perpendicular to the previously described horizontal plane.

Presence sensor **20** is preferably a sensor configured for detecting the position of a solid body within the monitoring region. For example, presence sensor **20** may be a laser scanner sensor adapted to emit infrared waves and receive such infrared waves reflected by a solid body that is present within the monitoring region. In particular, presence sensor **20** is configured for determining, based on the time elapsed between the emission of the laser beam and the reception of the reflected laser beam, the distance of the solid body from presence sensor **20** itself. As an alternative to a laser scanner sensor, presence sensor **20** may be any sensor based on electromagnetic waves, e.g. a lidar or radar sensor or a video camera, or any sensor based on sound waves, e.g. an ultrasonic sensor.

Presence sensor **20** is oriented in such a way that said monitoring region extends over walkway surface **7.** In particular, the monitoring region may have a greater extension than the surface whereon the person must rest his feet, or may have an extension smaller than or equal to said walkway surface. However, the monitoring region always comprises walkway surface **7,** and its extension is such that, when a person wants to gain access to winches **19** situated in proximity to walkway surface **7,** said monitoring region must necessarily be crossed by at least some parts of the person's body. In further embodiments and construction variants, it is also conceivable that there are a plurality of presence sensors combinedly monitoring the monitoring region, wherein each one of such presence sensors is configured for monitoring only a respective part of the monitoring region including only a corresponding part of walkway surface **7;** however, the plurality of presence sensors are so oriented that the combination of said respective parts of the monitoring region entirely covers walkway surface **7** adjacent to predefined access point **3A.**

The following will describe, by way of example, some optional or preferred technical details of control system **9,** which apply to all embodiments and construction variants of the foundation construction machine of the present invention, although for simplicity the description of such technical features will only refer to the embodiment shown in Figure 1.

In particular, control system **9** of foundation construction machine **1** may be physically installed on the machine. In further embodiments and construction variants, control system **9** may be installed, at least partly, in a remote location and operatively connected to presence sensor 20 to receive the detection signal.

With reference to the preferred configuration shown in Figure 2, control system **9** comprises an electronic processing system **11** (e.g. an FPGA or a microcontroller or a CPU or a DSP), connected to presence sensor **20,** and a central control unit **12** (e.g. a PLC), electrically connected to electronic processing system **11**.

Preferably, electronic processing system **11** is connected to presence sensor **20** by means of a communication bus **13**, e.g. a CAN bus. Alternatively, electronic processing system **11** is connected to presence sensor **20** by means of a dedicated communication channel.

Preferably, central control unit **12** is connected to electronic processing system **11** via a dual-channel connection, i.e. in such a way that electronic processing system **11** and central control unit **12** can mutually transmit a signal over two electric connections.

In the embodiment illustrated herein with reference to Figure 2, foundation construction machine **1** also comprises, by way of example, a braking device **14,** e.g. a mechanical brake or an electric motor control device or an overcenter valve, an alarm device **24,** e.g. a siren or a buzzer, and a starting circuit **15** for starting foundation construction machine **1.** Braking device **14,** alarm device **24** and starting circuit **15** are operatively connected to central control unit **12,** possibly by means of suitable hydraulic or electric control systems.

The following will describe in more detail some optional or preferred technical features of the means and modes implemented by central control unit **12** for processing the detection signal.

When sensor **20** detects the presence of a solid body, e.g. the presence of a person, within the monitoring region, it sends to electronic processing system **11,** over communication bus **13,** the detection signal representative of such presence. The transmission of the detection signal to electronic processing system **11** is effected, for example, by using a communication protocol configured with diagnostic mechanisms, e.g. the CANopen Safety protocol, in order to identify any errors in the communication of such detection signal (e.g. excessive transmission delays or lost parts of the information being transmitted by such signal). Such diagnostic mechanisms may envisage, merely by way of example, the transmission of a progressive number acting as a counter, which is incremented every time a signal is exchanged, or the use of a timestamp certifying the transmission of the detection signal or the time elapsed between the transmission of two successive detection signals or, anyway, any configuration of the communication protocol which is adapted for detecting any communication errors in the information sent by presence sensor **20** to electronic processing system **11** by means of the detection signal.

In particular, electronic processing system **11** is configured for processing the detection signal, e.g. by means of a program loaded in a memory unit of electronic processing system **11** itself. Also, electronic processing system **11** is configured for sending to central control unit **12** a command signal generated on the basis of such processing. For example, the program loaded in electronic processing system **11** may divide the entire monitoring region of sensor **20** into a severe alarm sub-region, closer to the dangerous zone, and a pre-alarm sub-region, farther from the dangerous zone, and may process the detection signal in order to determine the position of the solid body, thus determining if the detected solid body (i.e. the detected person) is within the pre-alarm sub-region and/or within the severe alarm sub-region. Regardless of whether the solid body is detected in the pre-alarm sub-region and/or in the severe alarm sub-region of the monitoring region, electronic processing system **11** is configured to send the command signal to central control unit **12.**

Preferably, if the solid body (i.e. the person) is detected within the severe alarm sub-region, the command signal will be transmitted to central control unit **12** via a dual-channel connection; on the contrary, the control signal will be transmitted to central control unit **12** via a single-channel connection if the solid body is detected within the pre-alarm sub-region.

In the embodiment illustrated herein with reference to Figure 2, central control unit **12** is configured for receiving the command signal and for sending, as a function of the received command signal, one or more control signals to one or more devices or components of foundation construction machine **1** in order to have such devices or components execute one or more predetermined functions, when the detection signal is representative of the presence of a solid body in proximity to walkway surface **7.** Preferably, such control signal (s) is (are) sent with priority over the commands issued by the operator of foundation construction machine **1,** so as to cause said machine to execute some predetermined functions.

The following will describe in more detail some optional or preferred technical features related to the predetermined functions that can be caused to be executed by means of the control signal output by control system **9** as a function of the received detection signal.

In particular, if the solid body (i.e. the person) is detected within the monitoring region (e.g. within the severe alarm sub-region), control system **9** may be configured for transmitting a control signal intended to cause foundation construction machine **1** to execute at least one predetermined function selected from a group of predetermined functions including:
- emitting one or more alarm signals,
- preventing at least one part, component or device of foundation construction machine **1** from moving, if this is not dangerous.

By way of example, the control signal may be intended to be sent, via suitable hydraulic and/or electric control circuits, to braking device **14.**

In one embodiment, braking device **14,** configured for receiving the control signal, is configured for preventing winch **19** mounted on upper structure **3** from moving. Of course, this motion prevention will only be automatically effected if it does not lead to the onset of additional dangerous situations. In particular, the control signal is transmitted to an overcenter valve and/or an electric motor control device and/or a mechanical parking brake of braking device **14,** so as to prevent the drum of winch **19** from turning when sensor **20** detects a solid body within the monitoring region.

According to further embodiments and construction variants, braking device **14** may be configured for preventing a rotation of upper structure **3** relative to self-moving or mobile assembly **2.** In this case as well, such motion prevention will only be automatically effected if it does not lead to the onset of additional dangerous situations. In particular, the control signal is transmitted to an overcenter valve and/or an electric motor control device and/or a mechanical parking brake of braking device **14,** so as to prevent any relative rotation between upper structure **3** and self-moving or mobile assembly **2.**

Preferably, according to particular construction variants of the present invention, braking device **14** is configured for effecting said motion prevention by preventing winch **19** from moving and/or upper structure **3** from rotating upon receiving said control signal due to the presence of the solid body within the monitoring region of presence sensor **20.** In other words, if a solid body is detected within the monitoring region, it will be impossible to start winch **19** and/or to turn upper structure **3,** which will thus remain stationary, without moving at all. In such particular construction variants, when presence sensor **20** detects the solid body in the monitoring region, if winch **19** and/or upper structure **3** have already been operated and/or are already in motion, it will generally be appropriate to avoid any automatic intervention by braking device **14;** in such a condition, in fact, any automatic intervention would threaten to introduce additional risks in the operation of foundation construction machine **1,** particularly because of the high forces involved and/or the high speeds of the various components when in operation. Optionally, in other different construction variants, if construction machine **1** is operating with moderate dynamics (e.g. low forces and/or speeds), it is possible to take into account some criteria for controlling the automatic intervention of braking device **14** to provide a gradual stopping action, e.g. controlled braking as opposed to a sudden stop of the components, and without turning off the machine.

According to further embodiments and construction variants, the control signal may be sent to a starting circuit **15** of foundation construction machine **1,** e.g. to a safety relay.

If the detection signal is representative of a person that is present in the pre-alarm sub-region of the monitoring region, the control signal may be sent to one or more alarm devices **24** in order to emit one or more alarm signals perceivable by an operator of said foundation construction machine. In particular, when a person is within the pre-alarm sub-region, the alarm signal emitted by one or more alarm devices **24** will consist of one or more pop-up windows appearing on a display installed in the operator's control station **22** or cabin.

If the detection signal is representative of a person that is present in the severe alarm sub-region of the monitoring region, the control signal may be sent to one or more alarm devices **24** in order to generate an audible and/or visual alarm. For example, the audible alarm may comprise the sound emitted by a buzzer, advantageously one that cannot be silenced. Moreover, for example, the visual alarm may include luminous and blinking signals (e.g. blinking indicators and/or alarm pop-up windows shown on a display installed in control station **22** or cabin). The audible alarm and/or the visual alarm are configured to be clearly audible and/or visible to the machine operator sitting in the operator's control station **22** or cabin and, preferably, also to the person within the monitored region.

Optionally, in the severe alarm sub-region other previously described predetermined functions may be executed in addition to the emission of one or more of the above-described alarms. It will be appreciated, therefore, that in the preferred case, wherein the pre-alarm sub-region is farther from the dangerous zone and the severe alarm sub-region is closer to it, a person entering the pre-alarm sub-region will cause the appearance of a pop-up window on a display in the operator's control station **22** or cabin while, should that person move closer and enter the severe alarm sub-region, this will imply the emission of one or more audible and/or visual alarms. Optionally, the entry of a person in the severe alarm sub-region may also cause some parts of foundation construction machine **1** to be prevented from moving, provided that this creates no additional dangers.

As mentioned above, in principle, the control signal sent by control system **9** causes foundation construction machine **1** to automatically execute at least one predetermined function, without requiring the manual intervention of the machine operator. Following the execution of the predetermined function(s), control system **9** may allow restoring the normal operability of foundation construction machine **1** by stopping the execution of the predetermined function(s), interrupting the alarm and/or operating and/or moving the machine and parts thereof, if a solid body is no longer detected within the area being monitored by presence sensor **20.** Preferably, such restoral of the normal operability will be allowed by control system **9** in a semi-manual manner, i.e. control system **9** will only allow the operator to manually stop the execution of the predetermined function(s) if presence sensor **20** is no longer detecting a solid body within the monitoring region.

Preferably, electronic processing system **11** is configured to detect a fault of at least one of presence sensor **20** and electronic processing system **11** itself, e.g. a power interruption or a malfunction of internal chips, and is further configured to cause foundation construction machine **1** to execute at least one of the above-described predetermined functions when it detects such a fault.

Optionally, electronic processing system **11** is configured to temporarily suspend the detection of the presence of a solid body by presence sensor **20** by means of a deactivation signal sent to presence sensor **20** over communication bus **13.** For example, in order to temporarily suspend such detection, it can be envisaged to use a key selector for overriding the sensor; in particular, such selector may be used during operations that do not require the machine to be normally operational, e.g. operations necessary for replacing the rope, with foundation construction machine **1** typically having its mast arranged horizontal or quasi-horizontal.

In addition, electronic processing system **11** may be configured to execute an initial memorization of the solid bodies initially detected by presence sensor **20** within the monitoring region, e.g. following an initial detection of the positions of any solid bodies to be considered as normally present within the monitoring region (e.g. machine parts, railings and walkway surfaces), and is configured to send the command signal to central control unit **12** when, after such initial memorization, presence sensor **20** detects, within the monitored zone, a solid body other than the previously stored solid bodies.

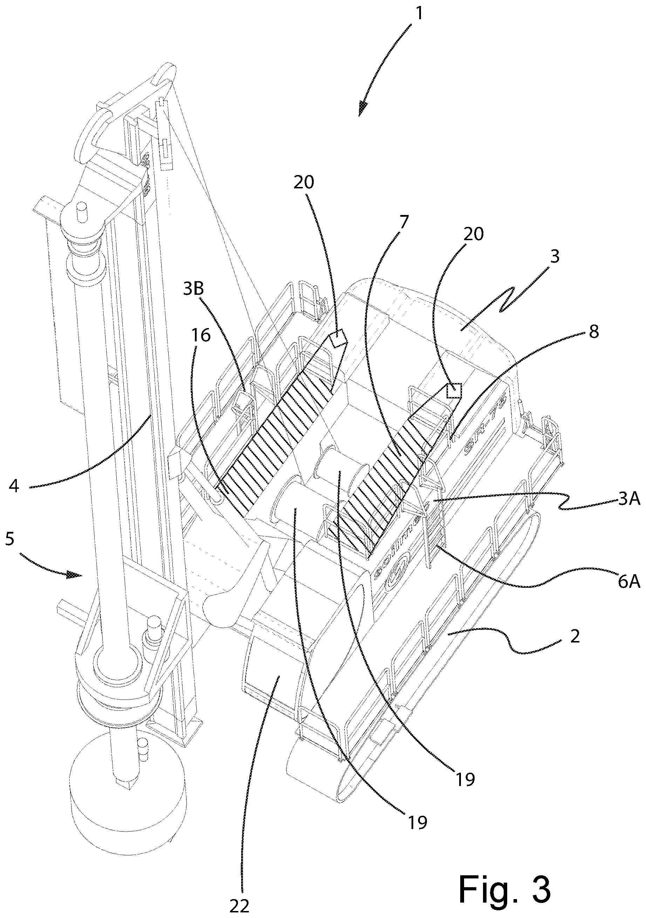

With reference to Figure 3, the following will describe foundation construction machine **1** made in accordance with a construction variant of the first embodiment.

Those parts and elements which are similar to - or which perform the same function as - those of the above-described embodiment and construction variant have been assigned the same alphanumerical references. For brevity, the description of such parts and elements will not be repeated below, and reference should be made to the above description.

In particular, upper structure **3** of foundation construction machine **1** shown in Figure 3 is equipped with a predefined access point **3A,** similar to the one described with reference to Figure 1, and with an additional predefined access point **3B,** situated substantially along the perimeter of upper structure **3,** configured to allow a person to gain access to upper structure **3,** and adjacent to an additional walkway surface **16.** In the embodiment illustrated in Figure 3, the additional predefined access point **3B** and the additional walkway surface **16** are located along one of the side panels of upper structure **3,** in particular along the side panel opposite the one along which the predefined access point **3A** and walkway surface **7** are located. As regards the additional predefined access point **3B** and the additional walkway surface **16,** the same description previously made with reference to the predefined access point **3A** and walkway surface **7** applies. In the construction variant shown in Figure 3, in addition to a first presence sensor **20** wholly identical to the one already described with reference to Figure 1, there is also a second presence sensor **20** mounted near additional walkway surface **16,** whose monitoring region covers additional walkway surface **16.** Preferably, the second presence sensor **20** is identical to the first presence sensor **20,** e.g. they are both laser scanner sensors; nevertheless, they may also be of different types, e.g. a laser scanner and a radar. Irrespective of the sensor type, the function of the second presence sensor **20** is wholly similar to the function of the first presence sensor **20** described with reference to Figure 1. In particular, both sensors are configured for detecting the presence of a solid body within the respective monitoring region and are operationally connected to control system **9** by means of two mutually independent connections or via a common communication bus **13.** Thus, when the first sensor **20** detects the presence of a solid body within its monitoring region, e.g. a service technician accessing walkway surface **7,** and/or when second sensor **20** detects the presence of a solid body within the respective monitoring region, e.g. a service technician accessing additional walkway surface **16,** central control unit **12** will send one or more control signals to one or more devices or components of foundation construction machine **1** in order to have such devices or components execute one or more predetermined functions as previously described. It should be understood, therefore, that everything already described with reference to Figure 1 also applies to the second presence sensor **20.**

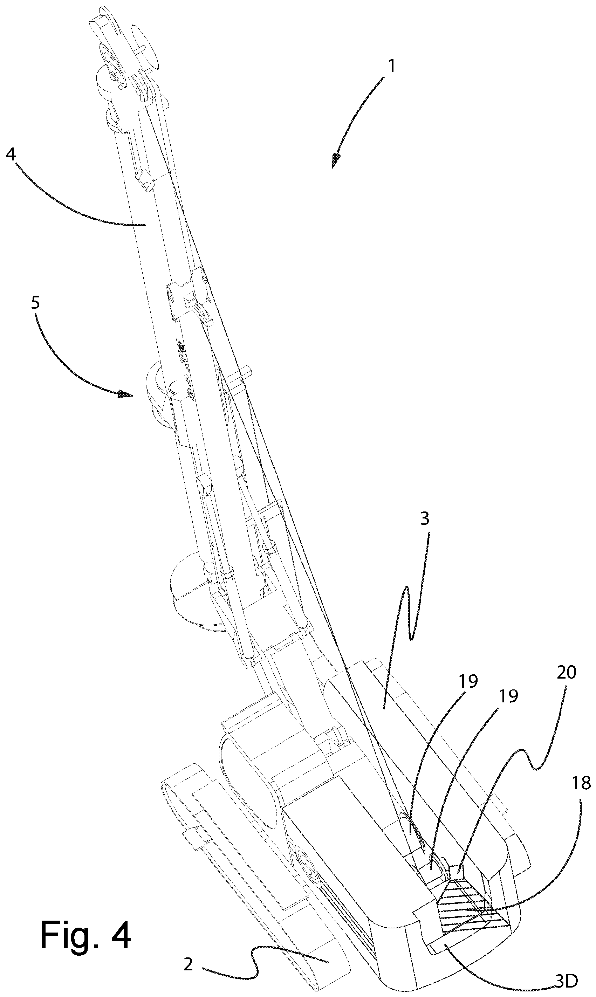

With reference to Figure 4, the following will illustrate foundation construction machine **1** made in accordance with a further construction variant of the first embodiment.

Those parts and elements which are similar to - or which perform the same function as - those of the above-described embodiment and construction variant have been assigned the same alphanumerical references. For brevity, the description of such parts and elements will not be repeated below, and reference should be made to the above description.
In particular, upper structure **3** of foundation construction machine **1** shown in the drawing is equipped with an independent predefined access point **3D** configured to allow a person to gain access to upper structure **3** from its rear or tail side, e.g. by simply climbing up to upper structure **3** directly from the ground by using available access means (e.g. access ladders). In particular, independent predefined access point **3D** allows a service technician to gain access to an independent walkway surface **18** of upper structure **3;** for example, from independent walkway surface **18** it is possible to access components of foundation construction machine **1** that need to be inspected and serviced, e.g. winches **19.** In particular, independent walkway surface **18** is adjacent to independent predefined access point **3D** and is situated in a substantially central position.

To upper structure **3** a presence sensor **20** is integrally mounted, which is configured for detecting the presence of a solid body within a monitoring region and which is so oriented that such monitoring region covers independent walkway surface **18.** In Figure 4, in particular, presence sensor **20** is mounted on independent walkway surface **18;** in further construction variants, however, presence sensor **20** may be mounted to any element integral with independent walkway surface **18,** e.g. the casings of upper structure **3** or the rear ballast elements or the railings. In any case, any persons moving at the lower level, i.e. the level where control station or cabin **22** can be accessed by walking on the track or on suitable lateral walkway surfaces, or on the ground whereon machine **1** lies, will not trigger the predetermined functions because they will not be detected by presence sensor **20.**

Although the construction variant of Figure 4 shows a single independent predefined access point **3D,** it is also conceivable that there are a plurality of independent predefined access points along the rear side and/or along the front side of the machine.

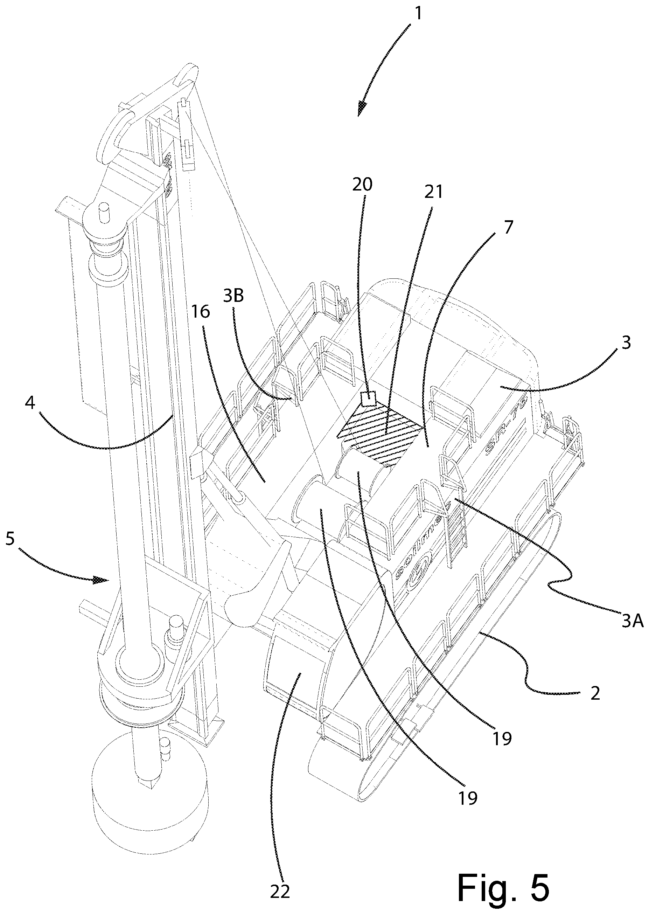

In the construction variant illustrated in Figure 4, control system **9** is operationally connected to presence sensor **20,** preferably via a communication bus **13,** so as to be configured for receiving from sensor **20** the detection signal representative of the presence of a solid body. It should therefore be understood that control system **9** is configured to cause foundation construction machine **1** to execute the predetermined function(s) when said presence sensor **20** detects a solid body on the respective independent walkway surface **18.**
With reference to Figure 5, the following will illustrate foundation construction machine **1** made in accordance with another construction variant of the first embodiment of the present invention. Those parts and elements which are similar to - or which perform the same function as - those of the above-described embodiment have been assigned the same alphanumerical references. For brevity, the description of such parts and elements will not be repeated below, and reference should be made to the above description. Unlike the previous example, Figure 5 shows a presence sensor **20** mounted integrally with upper structure **3,** so oriented and configured as to monitor a monitoring region integral with upper structure **3** and covering a walkway surface **21** which is not adjacent to a predefined access point **3A, 3B** that allows access to upper structure **3,** so as to detect the presence of a solid body in such monitoring region and send a detection signal representative of the presence of such solid body. By way of example, in Figure 5 walkway surface **21** corresponds to a treadable surface in proximity to at least one winch **19** to be inspected and serviced by a service technician. In particular, walkway surface **21** is a walkway surface internal to upper structure **3,** and is not arranged substantially along the perimeter of upper structure **3,** but internally thereto, being substantially delimited by casings, doors or components housed on upper structure **3.** Therefore, a service technician can only gain access to walkway surface **21** by using access means available inside upper structure **3,** e.g. an internal ladder or internal steps or internal doors, or anyway by overcoming a difference in height and/or a discontinuity existing between walkway surface **21** and walkway surface **7** or additional walkway surface **16** respectively adjacent to the predefined access points **3A** and **3B.** Although Figure 5 shows a single presence sensor **20,** it is also conceivable that there are a plurality of presence sensors combinedly monitoring the monitoring region, wherein each one of such presence sensors is configured for monitoring only a part of the monitoring region including only a corresponding part of non-adjacent walkway surface **21;** however, the plurality of presence sensors is oriented in a manner such that said respective parts of the monitoring region fully cover, as a whole, walkway surface **21** that is not adjacent to a predefined access point that allows access to upper structure **3.**

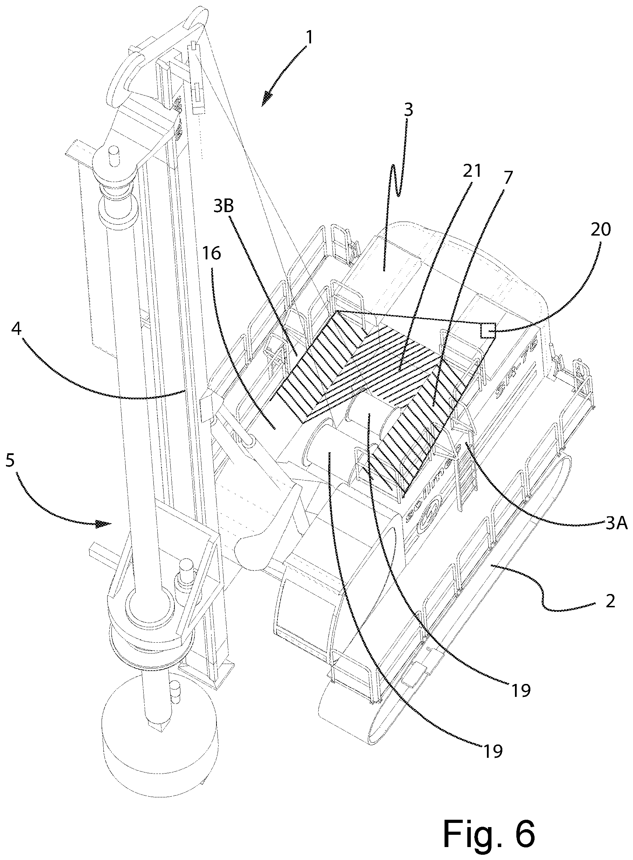

With reference to Figure 6, a foundation construction machine designated as a whole as **1** is made in accordance with a second embodiment of the present invention. It should be understood that the second embodiment may comprise, in addition or as an alternative, everything already described with reference to the first embodiment and the variants and combinations thereof, i.e. the second embodiment can be freely combined with what has been previously described herein. Those parts and elements which are similar to - or which perform the same function as - those of the first embodiment and variants thereof as previously described have been assigned the same alphanumerical references. For brevity, the description of such parts and elements will not be repeated below, and reference should be made to the above description. Moreover, the following will only describe those features which are additional or alternative to those of the first embodiment and its construction variants, and everything previously described still applies and remains unchanged. In fact, the features of the foundation construction machine according to the second embodiment can be freely combined with the features illustrated and described with reference to the first embodiment (and its construction variants). Unlike the previous example, Figure 6 shows a presence sensor **20** integrally mounted to upper structure **3,** so oriented and configured as to monitor a monitoring region integral with upper structure **3** and covering a plurality of walkway surfaces, in particular covering walkway surface **7,** which is adjacent to predefined access point **3A,** additional walkway surface **16,** which is adjacent to additional predefined access point **3B,** and also walkway surface **21,** which is not adjacent to a predefined access point that allows access to upper structure **3,** so as to detect the presence of a solid body in such monitoring region. In particular, after properly orienting presence sensor **20** and setting the characteristic parameters of its field of view (e.g. depth and angular width), the monitoring region will include no object belonging to foundation construction machine **1** and will remain above walkway surface **7** or **16** (e.g. the monitoring region may be an empty space or a surface containing only "air", e.g. situated 50-700mm above walkway surface **7).** Advantageously, the field of view and the monitoring region of presence sensor **20** are freely adjustable via software by means of electronic processing system **11;** for example, it is possible to set a variable field depth within the monitoring region in order to adapt the monitoring region to the particular geometry of upper structure **3.** Presence sensor **20** can detect the presence of a solid body in said monitoring region and is further configured for sending to control system **9** a detection signal representative of the presence of said solid body, so that control system **9** will cause foundation construction machine **1** to execute one or more predetermined functions, as previously described, when the detection signal is representative of the presence of a solid body in proximity to any walkway surface **7, 16** that is adjacent to a predefined access point **3A, 3B** and/or in proximity to any walkway surface **21** that is not adjacent to a predefined access point allowing access to upper structure **3.** It should therefore be understood that the second embodiment of the present invention teaches to adopt at least one presence sensor **20** so oriented and configured as to monitor a monitoring region integral with said upper structure **3** and covering a plurality of walkway surfaces **7, 16, 18, 21.** In the particular configuration of Figure 6, such monitoring region covers one or more walkway surfaces adjacent to the predefined access points that allow access to upper structure **3** and also one or more non-adjacent walkway surfaces, i.e. arranged inside upper structure **3.** In particular, such monitoring activity can be effected by means of a single presence sensor **20** whose field of view covers the whole desired monitoring region (as shown in Figure 6), resulting in a considerable simplification of the installations; therefore, this is one of the preferred solutions. Alternatively, such monitoring activity may be effected by means of a plurality of presence sensors **20,** each one configured for monitoring only a part of the whole desired monitoring region, and each one so oriented that the respective parts of the monitoring region will fully cover, as a whole, the desired monitoring region, i.e. walkway surfaces **7, 16** adjacent to the corresponding predefined access points **3A, 3B** and walkway surface **21** that is not adjacent to a predefined access point allowing access to upper structure **3.**

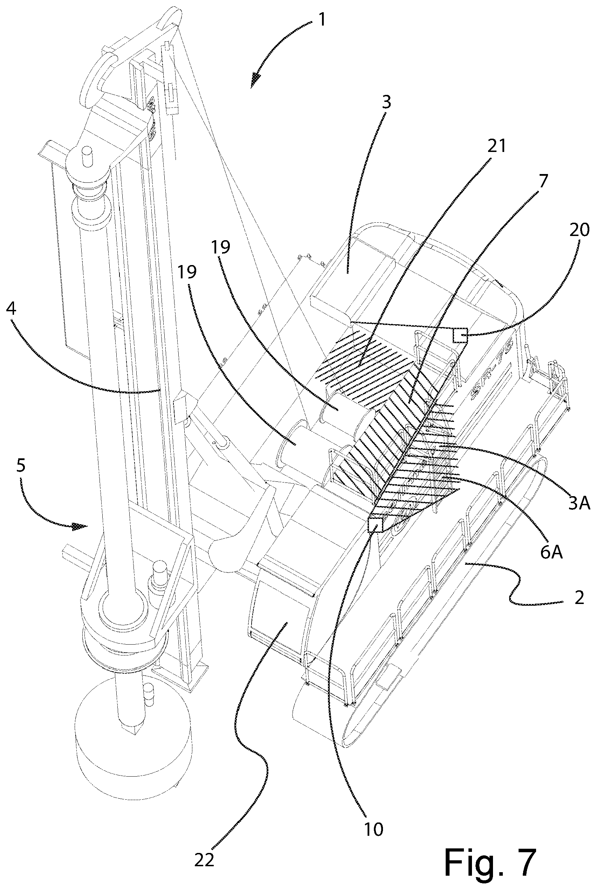

With reference to Figure 7, the following will illustrate foundation construction machine **1** made in accordance with a third embodiment of the present invention. It should be understood that the third embodiment may comprise, in addition or as an alternative, what has already been described with reference to the first and second embodiments and their variants and combinations, i.e. the third embodiment can be freely combined with the previous examples.

Those parts and elements which are similar to - or which perform the same function as - those of the previously illustrated embodiments and construction variants have been assigned the same alphanumerical references. For brevity, the description of such parts and elements will not be repeated below, and reference should be made to the above description. Moreover, the following will only describe those features which are additional or alternative to those of the first and second embodiments and their construction variants, and everything previously described still applies and remains unchanged. In fact, the features of the foundation construction machine according to the third embodiment can be freely combined with the features illustrated and described with reference to the first and second embodiments (and their construction variants).

Unlike the previous examples, the third embodiment shown in Figure 7 relates to a foundation construction machine **1** comprising also, in addition to at least one presence sensor **20** as previously described, an access sensor **10** integrally mounted to upper structure **3,** so oriented and configured as to monitor a monitoring region integral with upper structure **3** and including the predefined access point **3A.** Access sensor **10** has optional or preferred technical features that are equal or similar to those already illustrated in the description of presence sensor **20,** to which reference should be made, possibly with a different physical principle of operation of the sensor and/or different values of the characteristic parameters of its field of view. In particular, access sensor **10** may be of the same type as presence sensor **20,** e.g. both of them are laser scanner sensors, or it may be of a different type, e.g. presence sensor **20** is a laser scanner and access sensor **10** is a radar; at any rate, access sensor **10** can detect the presence of a solid body in the corresponding monitoring region and send a detection signal representative of the presence of the solid body. Access sensor **10** is connected to control system **9** in a way similar to that already described with reference to presence sensor **20,** in order to cause foundation construction machine **1** to execute one or more predetermined functions, as previously described, when the detection signal is representative of the presence of a solid body in proximity to predefined access point **3A.** After properly orienting access sensor **10** and setting the characteristic parameters of its field of view (e.g. depth and angular width), the monitoring region may coincide with an external space adjacent to ladder **6A** of the predefined access point **3A** and/or with an internal space facing walkway surface **7.** Preferably, the internal space is located inside the zone delimited by railings **8,** whereas the external space remains outside the zone delimited by railings **8** and, in both cases, such spaces are located above railing **8** and/or above walkway surface **7** (e.g. an empty space or a volume or a surface containing only "air"). In any case, any persons moving at the lower level, i.e. the level where access can be gained to control station **22** by walking on the track or on suitable lateral walkway surfaces, will not trigger the predetermined functions because they will not be detected by access sensor **10.** Vice versa, any persons climbing up to upper structure **3** from the predefined access point **3A** will trigger the predetermined functions because they will be detected by access sensor **10.** Optionally, also a person walking internally on walkway surface **7** can be detected by access sensor **10.** Access sensor **10** is so oriented that said monitoring region includes the predefined access point **3A.** In particular, the monitoring region may have a greater extension than the surface whereon the person must rest his feet or the volume that a person must cross with his whole body, or it may have an extension smaller than or equal to said surface or volume. However, the monitoring region always comprises the predefined access point **3A,** and its extension is such that, when a person wants to gain access to suitable walkway surface **7** adjacent to the predefined access point **3A** that allows access to upper structure **3,** said monitoring region must necessarily be crossed by at least some parts of the person's body. It should therefore be understood that said access sensor **10** may differ from presence sensor **20** only in the different orientation of its field of view, so that the monitoring region monitored by access sensor **10** extends over the predefined access point **3A** instead of covering walkway surface **7** adjacent thereto. In further embodiments and construction variants, it is also conceivable that there are a plurality of access sensors **10** monitoring, as a whole, the monitoring region including predefined access point **3A,** wherein each one of such access sensors **10** is configured for monitoring only a part of the monitoring region including only a corresponding part of the predefined access point **3A;** however, the plurality of access sensors **10** are so oriented that, taken together, said respective parts of the monitoring region will totally include the predefined access point **3A.** Although Figure 7 shows a single predefined access point **3A,** in further construction variants there may be a plurality of predefined access points **3A, 3B, 3D** (as previously described), each one being monitored by one or more access sensors **10.** Control system **9** is therefore operationally connected to each access sensor **10** and each presence sensor **20** to receive their detection signals, and is configured for sending a control signal intended to cause foundation construction machine **1** to execute at least one predetermined function when at least one of access sensors **10** or at least one of presence sensors **20** detects the presence of a person in proximity to any predefined access point **3A, 3B, 3D** allowing access to upper structure **3** or any walkway surface **7, 16, 18** adjacent to the predefined access points **3A, 3B, 3D** or any walkway surface **21** not adjacent to the predefined access points. Preferably, the predetermined functions executed by foundation construction machine **1** are always the same, regardless of whether the detection signal is received from an access sensor **10** or from a presence sensor **20,** e.g. in both cases an alarm signal will be emitted. Optionally, however, the predetermined functions executed by foundation construction machine **1** may be different depending on whether the detection signal is received from an access sensor **10** or from a presence sensor **20** and/or depending on whether the solid body is detected within a severe alarm sub-region or within a pre-alarm sub-region of the monitoring regions of access sensors **10** and of presence sensors **20.** Furthermore, although in Figure 7 access sensor **10** is shown mounted to cabin **22,** e.g. on top of it by means of a support bracket, in further construction variants access sensor **10** may indifferently be mounted to any other member integrally fixed to upper structure **3,** e.g. casings, walkway surface **7,** handrail, railing **8** or support brackets.

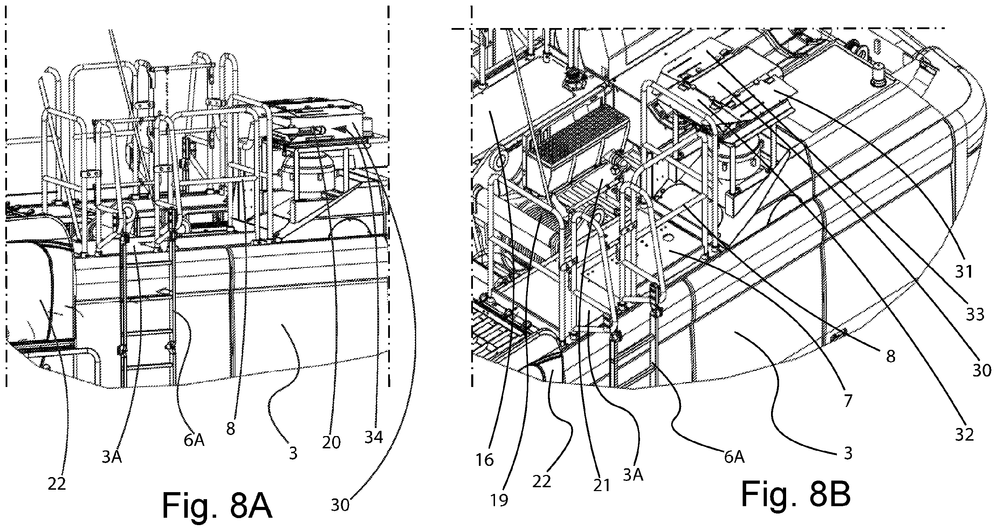

With reference to Figures 8-a, 8-b, the following will illustrate in detail a preferred installation configuration of a presence sensor **20** on foundation construction machine **1** of the present invention. Such preferred installation configuration applies to all of the above-described embodiments and construction variants, or combinations thereof. In such preferred configuration, presence sensor **20** is mounted under or inside a guard or cover **30,** mechanically connected to upper structure **3** in a fixed or removable manner, for the purpose of protecting presence sensor **20** when operating under severe environmental conditions, e.g. heavy rain or snow. Cover **30,** preferably having a boxed shape and made of sheet steel, is provided with a lateral slot or aperture **34** of appropriate height and shape, through which the electromagnetic radiation emitted by presence sensor **20** can pass, so that said presence sensor **20** can monitor the monitoring region without cover **30** representing a physical hindrance to the emission and/or propagation of the electromagnetic radiation from presence sensor **20.** Preferably, cover **30** is also equipped with lateral fins **31, 32, 33** that protrude on the sides of the box, within or under which presence sensor **20** is arranged, which fins have a suitable width and can be folded about hinges to adjust their angle for adequately protecting presence sensor **20,** preventing rain or snow subject to crosswinds from passing through aperture **34** and settling on presence sensor **20.** Lastly, it will be appreciated that the preferred installation configuration described with reference to a presence sensor **20** can also be adopted, in the same or a similar manner, for access sensor **10,** particularly when said access sensor **10** is a laser scanner.

The present invention also relates to a method for controlling a foundation construction machine **1;** as previously described, foundation construction machine **1** comprises:
- a self-moving or mobile assembly **2** configured to move on the ground, thus moving the foundation construction machine **1;**
- an upper structure **3,** mechanically connected to said self-moving or mobile assembly **2,** equipped with at least one predefined access point **3A, 3B, 3D** configured to allow a person to gain access to said upper structure **3,** and equipped with at least one walkway surface **7, 16, 18, 21;**
- a mast or boom **4,** mechanically connected to upper structure **3,** whereon an operating equipment **5** is configured to be mounted in order to drill the ground;
- a control station **22** mechanically connected to said upper structure **3** and configured to issue commands for controlling foundation construction machine **1;**
- at least one presence sensor **20** integrally mounted to upper structure **3,** which is so oriented and configured as to monitor a monitoring region integral with said upper structure **3** and covering said at least one walkway surface **7, 16, 18, 21,** said at least one presence sensor **20** being configured for detecting the presence of a solid body in said monitoring region and for sending a detection signal representative of the presence of said solid body;
- a control system **9** operationally connected to said at least one presence sensor **20;**
wherein said method comprises the following operating steps:
- said at least one presence sensor **20** does not detect any persons moving at a level where access can be gained to said control station **22;**
- said at least one presence sensor **20** detects the presence of a solid body in said monitoring region;
- said at least one presence sensor **20** sends to said control system **9** a detection signal representative of the presence of said solid body;
- said foundation construction machine **1** executes at least one predetermined function on the basis of said at least one control signal.
In addition to the above, said method for controlling a foundation construction machine **1** may also comprise the following operating steps:
- said control system **9** sends at least one control signal when said detection signal is representative of the presence of a solid body situated in proximity to said at least one walkway surface **7, 16, 18, 21;**
- said foundation construction machine **1** executes at least one predetermined function on the basis of said at least one control signal.

Other functional and structural details of the method have already been described above with reference to the embodiments and construction variants of foundation construction machine **1** and will not therefore be repeated for brevity's sake, but should be understood to be applicable to the present method without requiring any further description or explanation.

Of course, without prejudice to the principle of the invention, the various embodiments, construction variants and implementation details may be extensively varied from those described and illustrated herein by way of non-limiting example, without however departing from the scope of the invention as set out in the appended claims.

In particular, as aforementioned, the technical features that differentiate the various embodiments and variants thereof described and illustrated herein are freely interchangeable, whenever compatible.

## Claims

1. Foundation construction machine **(1)** comprising:
- a self-moving or mobile assembly **(2)** configured to move on the ground, thus moving the foundation construction machine **(1);**
- an upper structure **(3),** mechanically connected to said self-moving or mobile assembly **(2),**
- a mast or boom **(4),** mechanically connected to the upper structure **(3),** whereon an operating equipment **(5)** is configured to be mounted in order to drill the ground;
**characterized in that** said upper structure (3) being equipped with at least one predefined access point (3A, 3B, 3D) configured to allow a person to gain access to said upper structure (3), and being equipped with at least one walkway surface (7, 16, 18, 21) , whereon a person accessing the upper structure (3) will be able to stand or walk; and by further comprising
- at least one presence sensor **(20)** integrally mounted to the upper structure **(3),** so oriented and configured as to monitor a monitoring region integral with said upper structure **(3)** and covering said at least one walkway surface **(7, 16, 18, 21),** said at least one presence sensor (20) being configured for detecting the presence of a solid body in said monitoring region and for sending a detection signal representative of the presence of said solid body; and
- a control system **(9)** operationally connected to said at least one presence sensor **(20),** configured for receiving said detection signal from said at least one presence sensor **(20)** and for sending at least one control signal intended to cause said foundation construction machine **(1)** to execute at least one predetermined function when said detection signal is representative of the presence of a solid body situated in proximity to said at least one walkway surface **(7, 16, 18, 21).**

2. Foundation construction machine according to claim 1, wherein said upper structure **(3)** further comprises a control station **(22)** intended to receive an operator, so that the latter can send commands to said foundation construction machine; said at least one presence sensor **(20)** is mounted and oriented on said upper structure **(3)** in a manner such that said monitoring region excludes those walkway surfaces through which said control station **(22)** is accessible.

3. Foundation construction machine according to claim 1 or 2, wherein said at least one walkway surface **(7, 16, 18)** is adjacent to at least one predefined access point **(3A, 3B, 3D).**

4. Foundation construction machine according to claim 1 or 2, wherein said at least one walkway surface **(21)** is a walkway surface internal to the upper structure **(3).**

5. Foundation construction machine according to any one of the preceding claims, wherein said at least one presence sensor **(20)** is oriented and configured for monitoring a monitoring region integral with said upper structure **(3)** and covering a plurality of walkway surfaces **(7, 16, 18,21).**

6. Foundation construction machine according to any one of the preceding claims, wherein said at least one walkway surface **(7, 16, 18, 21)** is situated in a position from which at least one winch **(19)** mounted to the upper structure **(3)** is accessible.

7. Foundation construction machine according to any one of the preceding claims, further comprising
- at least one access sensor **(10)** integrally mounted to the upper structure **(3),** so oriented and configured as to monitor a monitoring region integral with the upper structure **(3)** and including said at least one predefined access point **(3A, 3B, 3D),** in order to detect the presence of a solid body in said monitoring region and send a detection signal representative of the presence of said solid body;
said control system **(9)** being operationally connected to said at least one access sensor **(10)** and configured for receiving said detection signal from said at least one access sensor **(10)** and for sending at least one control signal intended to cause said foundation construction machine **(1)** to execute at least one predetermined function when said detection signal received from said at least one access sensor **(10)** is representative of the presence of a solid body situated in proximity to said at least one predefined access point **(3A, 3B, 3D).**

8. Foundation construction machine according to any one of the preceding claims, wherein said at least one predetermined function is executed automatically by the foundation construction machine **(1)** through said control signal sent by the control system **(9)** and having priority over any commands issued by the operator of the machine **(1).**

9. Foundation construction machine according to any one of the preceding claims, wherein said at least one predetermined function is selected from the following group of predetermined functions:
- emitting one or more alarm signals, and
- preventing at least one part, component or device of the foundation construction machine from moving.

10. Foundation construction machine according to any one of the preceding claims, wherein said control system **(9)** allows stopping, in a semi-manual manner, the execution of said at least one predetermined function when said at least one presence sensor **(20)** and/or said at least one access sensor **(10)** is not detecting the presence of the solid body within the respective monitoring region.

11. Foundation construction machine according to any one of the preceding claims, wherein said control system **(9)** is configured for detecting a fault in said at least one access sensor **(10)** and/or said at least one presence sensor **(20)** and/or said control system **(9).**

12. Foundation construction machine according to claim 11, wherein said control system **(9)** is further configured to cause said foundation construction machine **(1)** to execute said at least one predetermined function when said control system **(9)** detects said fault.

13. Foundation construction machine according to any one of the preceding claims, further comprising a cover **(30)** mechanically connected to the upper structure **(3),** said at least one presence sensor **(20)** being mounted under or inside said cover **(30).**

14. Foundation construction machine according to claim 13, wherein said cover **(30)** has a lateral aperture **(34)** through which an electromagnetic radiation emitted by the at least one presence sensor **(20)** can pass.

15. Foundation construction machine according to claim 14, wherein said cover **(30)** is equipped with lateral fins **(31, 32, 33).**

16. Foundation construction machine according to claim 15, wherein said lateral fins **(31, 32, 33)** are foldable.

17. Foundation construction machine according to any one of the preceding claims, wherein said at least one access sensor **(10)** and/or said at least one presence sensor **(20)** is configured to detect the position of a solid body within the respective monitoring region.

18. Foundation construction machine according to claim 17, wherein said at least one access sensor **(10)** and/or said at least one presence sensor **(20)** is a laser scanner sensor.

19. Foundation construction machine according to any one of the preceding claims, wherein said at least one access sensor **(10)** and/or said at least one presence sensor **(20)** has a variable spatial resolution.

20. Foundation construction machine according to any one of the preceding claims, wherein said at least one access sensor **(10)** and/or said at least one presence sensor **(20)** has a variable field of view.

21. Foundation construction machine according to any one of the preceding claims, wherein the control signal sent by said control system **(9)** is transmitted via a dual-channel connection.

22. Foundation construction machine according to any one of the preceding claims, wherein said control system **(9)** is configured to send a deactivation signal to said at least one access sensor **(10)** and/or said at least one presence sensor **(20)** in order to temporarily suspend the detection of the presence of a solid body by said at least one access sensor **(10)** and/or said at least one presence sensor **(20).**

23. Foundation construction machine according to any one of the preceding claims, wherein said control system **(9)** is configured to execute an initial memorization of the solid bodies detected by said at least one access sensor **(10)** and/or said at least one presence sensor **(20)** within the respective monitoring region.

24. Foundation construction machine according to claim 23, wherein said control system **(9)** is configured to send said at least one control signal when said at least one access sensor **(10)** and/or said at least one presence sensor **(20)** detects, in the respective monitoring region, a solid body which is different from the solid bodies previously stored during the initial memorization.

25. Foundation construction machine according to any one of the preceding claims, which includes a plurality of access sensors **(10)** and/or a plurality of presence sensors **(20).**

26. Method for controlling a foundation construction machine **(1** according to any one of claims 1-25,
said foundation construction machine comprising:
- a self-moving or mobile assembly (2) configured to move on the ground, thus moving the foundation construction machine **(1);**
- an upper structure **(3),** mechanically connected to said self-moving or mobile assembly **(2),** equipped with at least one predefined access point **(3A, 3B, 3D)** configured to allow a person to gain access to said upper structure **(3),** and equipped with at least one walkway surface **(7, 16, 18, 21);**
- a mast or boom **(4),** mechanically connected to the upper structure **(3),** whereon an operating equipment (5) is configured to be mounted in order to drill the ground;
- at least one presence sensor **(20)** integrally mounted to the upper structure **(3),** which is so oriented and configured as to monitor a monitoring region integral with said upper structure **(3)** and covering said at least one walkway surface **(7, 16, 18, 21),** said at least one presence sensor **(20)** being configured for detecting the presence of a solid body in said monitoring region and for sending a detection signal representative of the presence of said solid body;
- a control system **(9)** operationally connected to said at least one presence sensor **(20);**
wherein said method comprises the following operating steps:
- said at least one presence sensor **(20)** detects the presence of a solid body in said monitoring region;
- said at least one presence sensor **(20)** sends to said control system **(9)** a detection signal representative of the presence of said solid body;
- said control system **(9)** sends at least one control signal when said detection signal is representative of the presence of a solid body situated in proximity to said at least one walkway surface **(7, 16, 18, 21);**
- said foundation construction machine **(1)** executes at least one predetermined function on the basis of said at least one control signal.

27. Method for controlling a foundation construction machine **(1)** according to claim 26, wherein said upper structure **(3)** further comprises a control station **(22)** intended to receive an operator, so that the latter can send commands to said foundation construction machine **(1);** and
wherein said at least one presence sensor **(20)** does not detect the presence of any solid bodies passing in an area through which access can be gained to said control station **(22),** said at least one presence sensor **(20)** being mounted and oriented on said upper structure **(3)** in a manner such that said monitoring region excludes those walkway surfaces through which said control station **(22)** is accessible.

## Patentansprüche

1. Gründungsbaumaschine (1), umfassend:
• eine selbstfahrende oder mobile Baugruppe (2), die dazu eingerichtet ist, sich auf dem Boden zu bewegen und dadurch die Gründungsbaumaschine (1) zu bewegen;
• eine Oberstruktur (3), die mechanisch mit der genannten selbstfahrenden oder mobilen Baugruppe (2) verbunden ist;
• einen Mast oder Ausleger (4), der mechanisch mit der Oberstruktur verbunden ist und woran eine Betriebsausrüstung (5) dazu eingerichtet ist, montiert zu werden, um den Boden zu bohren;
**dadurch gekennzeichnet, dass** die genannte Oberstruktur (3) mit mindestens einem vordefinierten Zugangspunkt (3A, 3B, 3D) ausgestattet ist, der dazu eingerichtet ist, einer Person zu erlauben, Zugang zu der genannten Oberstruktur (3) zu erlangen, und mit mindestens einer Gehfläche (7, 16, 18, 21) ausgestattet ist, worauf eine Person, die auf die Oberstruktur (3) zugreift, in der Lage sein wird, zu stehen oder zu gehen; und ferner umfassend
• mindestens einen Präsenzsensor (20), der integral an der Oberstruktur (3) montiert ist, derart ausgerichtet und eingerichtet, dass er einen Überwachungsbereich überwacht, der integral mit der genannten Oberstruktur (3) ist und die genannte mindestens eine Gehfläche (7, 16, 18, 21) abdeckt, wobei der genannte mindestens eine Präsenzsensor (20) dazu eingerichtet ist, das Vorhandensein eines festen Körpers in dem genannten Überwachungsbereich zu detektieren und ein Detektionssignal zu senden, das repräsentativ für das Vorhandensein des genannten festen Körpers ist; und
• ein Steuersystem (9), das operativ mit dem genannten mindestens einen Präsenzsensor (20) verbunden ist und dazu eingerichtet ist, das genannte Detektionssignal von dem genannten mindestens einen Präsenzsensor (20) zu empfangen und mindestens ein Steuersignal zu senden, das dazu bestimmt ist, zu bewirken, dass die genannte Gründungsbaumaschine (1) mindestens eine vorbestimmte Funktion ausführt, wenn das genannte Detektionssignal repräsentativ für das Vorhandensein eines festen Körpers ist, der in Nähe der genannten mindestens einen Gehfläche (7, 16, 18, 21) gelegen ist.

2. Gründungsbaumaschine nach Anspruch 1, wobei die genannte Oberstruktur (3) ferner eine Steuerstation (22) umfasst, die dazu bestimmt ist, einen Bediener aufzunehmen, so dass der Letztere Befehle an die genannte Gründungsbaumaschine senden kann; der genannte mindestens eine Präsenzsensor (20) ist an der genannten Oberstruktur (3) montiert und ausgerichtet in einer Weise, dass der genannte Überwachungsbereich jene Gehflächen ausschließt, durch welche die genannte Steuerstation (22) zugänglich ist.

3. Gründungsbaumaschine nach Anspruch 1 oder 2, wobei die genannte mindestens eine Gehfläche (7, 16, 18) an mindestens einen vordefinierten Zugangspunkt (3A, 3B, 3D) angrenzt.

4. Gründungsbaumaschine nach Anspruch 1 oder 2, wobei die genannte mindestens eine Gehfläche (21) eine Gehfläche ist, die innerhalb der Oberstruktur (3) liegt.

5. Gründungsbaumaschine nach einem der vorstehenden Ansprüche, wobei der genannte mindestens eine Präsenzsensor (20) ausgerichtet und dazu eingerichtet ist, einen Überwachungsbereich zu überwachen, der integral mit der genannten Oberstruktur (3) ist und eine Mehrzahl von Gehflächen (7, 16, 18, 21) abdeckt.

6. Gründungsbaumaschine nach einem der vorstehenden Ansprüche, wobei die genannte mindestens eine Gehfläche (7, 16, 18, 21) in einer Position gelegen ist, von welcher aus mindestens eine an der Oberstruktur (3) montierte Winde (19) zugänglich ist.

7. Gründungsbaumaschine nach einem der vorstehenden Ansprüche, ferner umfassend
• mindestens einen Zugangssensor (10), der integral an der Oberstruktur (3) montiert ist, derart ausgerichtet und eingerichtet, einen Überwachungsbereich zu überwachen, der integral mit der Oberstruktur (3) ist und den genannten mindestens einen vordefinierten Zugangspunkt (3A, 3B, 3D) einschließt, um das Vorhandensein eines festen Körpers in dem genannten Überwachungsbereich zu detektieren und ein Detektionssignal zu senden, das repräsentativ für das Vorhandensein des genannten festen Körpers ist;
wobei das genannte Steuersystem (9) operativ mit dem genannten mindestens einen Zugangssensor (10) verbunden ist und dazu eingerichtet ist, das genannte Detektionssignal von dem genannten mindestens einen Zugangssensor (10) zu empfangen und mindestens ein Steuersignal zu senden, das dazu bestimmt ist, zu bewirken, dass die genannte Gründungsbaumaschine (1) mindestens eine vorbestimmte Funktion ausführt, wenn das von dem genannten mindestens einen Zugangssensor (10) empfangene genannte Detektionssignal repräsentativ für das Vorhandensein eines festen Körpers ist, der in Nähe des genannten mindestens einen vordefinierten Zugangspunkts (3A, 3B, 3D) gelegen ist.

8. Gründungsbaumaschine nach einem der vorstehenden Ansprüche, wobei die genannte mindestens eine vorbestimmte Funktion automatisch von der Gründungsbaumaschine (1) durch das genannte, von dem Steuersystem (9) gesendete Steuersignal ausgeführt wird und Vorrang vor irgendwelchen von dem Bediener der Maschine (1) ausgegebenen Befehlen hat.

9. Gründungsbaumaschine nach einem der vorstehenden Ansprüche, wobei die genannte mindestens eine vorbestimmte Funktion aus der folgenden Gruppe von vorbestimmten Funktionen ausgewählt ist:
• Aussenden eines oder mehrerer Alarmsignale; und
• Verhindern, dass sich mindestens ein Teil, eine Komponente oder eine Vorrichtung der Gründungsbaumaschine bewegt.

10. Gründungsbaumaschine nach einem der vorstehenden Ansprüche, wobei das genannte Steuersystem (9) das Stoppen, in einer halbmanuellen Weise, der Ausführung der genannten mindestens einen vorbestimmten Funktion erlaubt, wenn der genannte mindestens eine Präsenzsensor (20) und/oder der genannte mindestens eine Zugangssensor (10) das Vorhandensein des festen Körpers innerhalb des jeweiligen Überwachungsbereichs nicht detektiert.

11. Gründungsbaumaschine nach einem der vorstehenden Ansprüche, wobei das genannte Steuersystem (9) dazu eingerichtet ist, einen Fehler in dem genannten mindestens einen Zugangssensor (10) und/oder dem genannten mindestens einen Präsenzsensor (20) und/oder dem genannten Steuersystem (9) zu detektieren.

12. Gründungsbaumaschine nach Anspruch 11, wobei das genannte Steuersystem (9) ferner dazu eingerichtet ist, zu bewirken, dass die genannte Gründungsbaumaschine (1) die genannte mindestens eine vorbestimmte Funktion ausführt, wenn das genannte Steuersystem (9) den genannten Fehler detektiert.

13. Gründungsbaumaschine nach einem der vorstehenden Ansprüche, ferner umfassend eine Abdeckung (30), die mechanisch mit der Oberstruktur (3) verbunden ist, wobei der genannte mindestens eine Präsenzsensor (20) unter oder innerhalb der genannten Abdeckung (30) montiert ist.

14. Gründungsbaumaschine nach Anspruch 13, wobei die genannte Abdeckung (30) eine seitliche Öffnung (34) hat, durch welche eine elektromagnetische Strahlung, emittiert von dem mindestens einen Präsenzsensor (20), hindurchtreten kann.

15. Gründungsbaumaschine nach Anspruch 14, wobei die genannte Abdeckung (30) mit seitlichen Flossen (31, 32, 33) ausgestattet ist.

16. Gründungsbaumaschine nach Anspruch 15, wobei die genannten seitlichen Flossen (31, 32, 33) faltbar sind.

17. Gründungsbaumaschine nach einem der vorstehenden Ansprüche, wobei der genannte mindestens eine Zugangssensor (10) und/oder der genannte mindestens eine Präsenzsensor (20) dazu eingerichtet ist, die Position eines festen Körpers innerhalb des jeweiligen Überwachungsbereichs zu detektieren.

18. Gründungsbaumaschine nach Anspruch 17, wobei der genannte mindestens eine Zugangssensor (10) und/oder der genannte mindestens eine Präsenzsensor (20) ein Laserscannersensor ist.

19. Gründungsbaumaschine nach einem der vorstehenden Ansprüche, wobei der genannte mindestens eine Zugangssensor (10) und/oder der genannte mindestens eine Präsenzsensor (20) eine variable räumliche Auflösung hat.

20. Gründungsbaumaschine nach einem der vorstehenden Ansprüche, wobei der genannte mindestens eine Zugangssensor (10) und/oder der genannte mindestens eine Präsenzsensor (20) ein variables Sichtfeld hat.

21. Gründungsbaumaschine nach einem der vorstehenden Ansprüche, wobei das von dem genannten Steuersystem (9) gesendete Steuersignal über eine Zweikanalverbindung übertragen wird.

22. Gründungsbaumaschine nach einem der vorstehenden Ansprüche, wobei das genannte Steuersystem (9) dazu eingerichtet ist, ein Deaktivierungssignal an den genannten mindestens einen Zugangssensor (10) und/oder den genannten mindestens einen Präsenzsensor (20) zu senden, um die Detektion des Vorhandenseins eines festen Körpers durch den genannten mindestens einen Zugangssensor (10) und/oder den genannten mindestens einen Präsenzsensor (20) vorübergehend auszusetzen.

23. Gründungsbaumaschine nach einem der vorstehenden Ansprüche, wobei das genannte Steuersystem (9) dazu eingerichtet ist, eine anfängliche Memorisierung der festen Körper auszuführen, die von dem genannten mindestens einen Zugangssensor (10) und/oder dem genannten mindestens einen Präsenzsensor (20) innerhalb des jeweiligen Überwachungsbereichs detektiert werden.

24. Gründungsbaumaschine nach Anspruch 23, wobei das genannte Steuersystem (9) dazu eingerichtet ist, das genannte mindestens eine Steuersignal zu senden, wenn der genannte mindestens eine Zugangssensor (10) und/oder der genannte mindestens eine Präsenzsensor (20) in dem jeweiligen Überwachungsbereich einen festen Körper detektiert, der verschieden ist von den festen Körpern, die zuvor während der anfänglichen Memorisierung gespeichert wurden.

25. Gründungsbaumaschine nach einem der vorstehenden Ansprüche, die eine Mehrzahl von Zugangssensoren (10) und/oder eine Mehrzahl von Präsenzsensoren (20) einschließt.

26. Verfahren zum Steuern einer Gründungsbaumaschine (1) nach einem der Ansprüche 1-25, wobei die genannte Gründungsbaumaschine umfasst:
• eine selbstfahrende oder mobile Baugruppe (2), die dazu eingerichtet ist, sich auf dem Boden zu bewegen und dadurch die Gründungsbaumaschine (1) zu bewegen;
• eine Oberstruktur (3), die mechanisch mit der genannten selbstfahrenden oder mobilen Baugruppe (2) verbunden ist, ausgestattet mit mindestens einem vordefinierten Zugangspunkt (3A, 3B, 3D), der dazu eingerichtet ist, einer Person zu erlauben, Zugang zu der genannten Oberstruktur (3) zu erlangen, und ausgestattet mit mindestens einer Gehfläche (7, 16, 18, 21);
• einen Mast oder Ausleger (4), der mechanisch mit der Oberstruktur verbunden ist und woran eine Betriebsausrüstung (5) dazu eingerichtet ist, montiert zu werden, um den Boden zu bohren;
• mindestens einen Präsenzsensor (20), der integral an der Oberstruktur (3) montiert ist, welcher derart ausgerichtet und eingerichtet ist, einen Überwachungsbereich zu überwachen, der integral mit der genannten Oberstruktur (3) ist und die genannte mindestens eine Gehfläche (7, 16, 18, 21) abdeckt, wobei der genannte mindestens eine Präsenzsensor (20) dazu eingerichtet ist, das Vorhandensein eines festen Körpers in dem genannten Überwachungsbereich zu detektieren und ein Detektionssignal zu senden, das repräsentativ für das Vorhandensein des genannten festen Körpers ist;
• ein Steuersystem (9), das operativ mit dem genannten mindestens einen Präsenzsensor (20) verbunden ist;
wobei das genannte Verfahren die folgenden Betriebsschritte umfasst:
• der genannte mindestens eine Präsenzsensor (20) detektiert das Vorhandensein eines festen Körpers in dem genannten Überwachungsbereich;
• der genannte mindestens eine Präsenzsensor (20) sendet an das genannte Steuersystem (9) ein Detektionssignal, das repräsentativ für das Vorhandensein des genannten festen Körpers ist;
• das genannte Steuersystem (9) sendet mindestens ein Steuersignal, wenn das genannte Detektionssignal repräsentativ für das Vorhandensein eines festen Körpers ist, der in Nähe der genannten mindestens einen Gehfläche (7, 16, 18, 21) gelegen ist;
• die genannte Gründungsbaumaschine (1) führt mindestens eine vorbestimmte Funktion auf der Grundlage des genannten mindestens einen Steuersignals aus.

27. Verfahren zum Steuern einer Gründungsbaumaschine (1) nach Anspruch 26, wobei die genannte Oberstruktur (3) ferner eine Steuerstation (22) umfasst, die dazu bestimmt ist, einen Bediener aufzunehmen, so dass der Letztere Befehle an die genannte Gründungsbaumaschine (1) senden kann; und wobei der genannte mindestens eine Präsenzsensor (20) nicht das Vorhandensein irgendwelcher fester Körper detektiert, die in einem Bereich passieren, durch welchen Zugang zu der genannten Steuerstation (22) erlangt werden kann, wobei der genannte mindestens eine Präsenzsensor (20) an der genannten Oberstruktur (3) montiert und ausgerichtet ist in einer Weise, dass der genannte Überwachungsbereich jene Gehflächen ausschließt, durch welche die genannte Steuerstation (22) zugänglich ist.

## Revendications

1. Engin de construction de fondations (**1**), comprenant :
- un ensemble automoteur ou mobile (**2**) configuré pour se déplacer sur le sol, en déplaçant ainsi l'engin de construction de fondations (**1**) ;
- une structure supérieure (**3**), connectée mécaniquement audit ensemble automoteur ou mobile (**2**),
- un mât ou une flèche (**4**), connecté(e) mécaniquement à la structure supérieure (**3**), un équipement d'exploitation (**5**) étant configuré pour être monté sur celui-ci, afin de forer le sol ;
**caractérisé en ce que** ladite structure supérieure (**3**) est équipée d'au moins un point d'accès prédéfini (**3A, 3B, 3D**) configuré pour permettre à une personne d'accéder à ladite structure supérieure (**3**), et étant équipée d'au moins une surface de passerelle (**7, 16, 18, 21**), sur laquelle une personne accédant à la structure supérieure (**3**) est capable de se tenir debout ou de marcher ; et en comprenant en outre
- au moins un capteur de présence (**20**) monté d'un seul tenant sur la structure supérieure (**3**), orienté et configuré de manière à surveiller une région de surveillance d'un seul tenant avec ladite structure supérieure (**3**) et recouvrant ladite au moins une surface de passerelle (**7, 16, 18, 21**), ledit au moins un capteur de présence (**20**) étant configuré pour détecter la présence d'un corps solide dans ladite région de surveillance et pour envoyer un signal de détection représentatif de la présence dudit corps solide ; et
- un système de commande (**9**) connecté de manière opérationnelle audit au moins un capteur de présence (**20**), configuré pour recevoir ledit signal de détection en provenance dudit au moins un capteur de présence (**20**) et pour envoyer au moins un signal de commande prévu pour amener ledit engin de construction de fondations (**1**) à exécuter au moins une fonction prédéterminée lorsque ledit signal de détection est représentatif de la présence d'un corps solide situé à proximité de ladite au moins une surface de passerelle (**7, 16, 18, 21**).

2. Engin de construction de fondations selon la revendication 1, dans lequel ladite structure supérieure (**3**) comprend en outre un poste de commande (**22**) destiné à recevoir un opérateur, de sorte que ce dernier peut envoyer des commandes audit engin de construction de fondations ; ledit au moins un capteur de présence (**20**) est monté et orienté sur ladite structure supérieure (**3**) de telle sorte que ladite région de surveillance exclut les surfaces de passerelle à travers lesquelles ledit poste de commande (**22**) est accessible.

3. Engin de construction de fondations selon la revendication 1 ou 2, dans lequel ladite au moins une surface de passerelle (**7, 16, 18**) est adjacente à au moins un point d'accès prédéfini (**3A, 3B, 3D**).

4. Engin de construction de fondations selon la revendication **1** ou **2**, dans lequel ladite au moins une surface de passerelle (**21**) est une surface de passerelle interne à la structure supérieure (**3**).

5. Engin de construction de fondations selon l'une quelconque des revendications précédentes, dans lequel ledit au moins un capteur de présence (**20**) est orienté et configuré pour surveiller une région de surveillance d'un seul tenant avec ladite structure supérieure (**3**) et recouvrant une pluralité de surfaces de passerelle (**7, 16, 18, 21**).

6. Engin de construction de fondations selon l'une quelconque des revendications précédentes, dans lequel ladite au moins une surface de passerelle (**7, 16, 18, 21**) est située dans une position à partir de laquelle au moins un treuil (**19**) monté sur la structure supérieure (**3**) est accessible.

7. Engin de construction de fondations selon l'une quelconque des revendications précédentes, comprenant en outre
- au moins un capteur d'accès (**10**) monté d'un seul tenant sur la structure supérieure (**3**), orienté et configuré de manière à surveiller une région de surveillance d'un seul tenant avec la structure supérieure (**3**) et incluant ledit au moins un point d'accès prédéfini (**3A, 3B, 3D**), afin de détecter la présence d'un corps solide dans ladite région de surveillance et d'envoyer un signal de détection représentatif de la présence dudit corps solide ;
ledit système de commande (**9**) étant connecté de manière opérationnelle audit au moins un capteur d'accès (**10**) et configuré pour recevoir ledit signal de détection en provenance dudit au moins un capteur d'accès (**10**) et pour envoyer au moins un signal de commande prévu pour amener ledit engin de construction de fondations (**1**) à exécuter au moins une fonction prédéterminée lorsque ledit signal de détection reçu dudit au moins un capteur d'accès (**10**) est représentatif de la présence d'un corps solide situé à proximité dudit au moins un point d'accès prédéfini (**3A, 3B, 3D**).

8. Engin de construction de fondations selon l'une quelconque des revendications précédentes, dans laquelle ladite au moins une fonction prédéterminée est exécutée automatiquement par l'engin de construction de fondations (**1**) par l'intermédiaire dudit signal de commande envoyé par le système de commande (**9**) et ayant priorité sur toute commande émise par l'opérateur de l'engin (**1**).

9. Engin de construction de fondations selon l'une quelconque des revendications précédentes, dans laquelle ladite au moins une fonction prédéterminée est sélectionnée parmi le groupe de fonctions prédéterminées consistant à :
- émettre un ou plusieurs signaux d'alarme, et
- empêcher au moins une partie, un composant ou un dispositif de l'engin de construction de fondations de se déplacer.

10. Engin de construction de fondations selon l'une quelconque des revendications précédentes, dans laquelle ledit système de commande (**9**) permet d'arrêter, de manière semi-manuelle, l'exécution de ladite au moins une fonction prédéterminée lorsque ledit au moins un capteur de présence (**20**) et/ou ledit au moins un capteur d'accès (**10**) ne détecte pas la présence du corps solide dans la région de surveillance respective.

11. Engin de construction de fondations selon l'une quelconque des revendications précédentes, dans laquelle ledit système de commande (**9**) est configuré pour détecter un défaut dans ledit au moins un capteur d'accès (**10**) et/ou ledit au moins un capteur de présence (**20**) et/ou ledit système de commande (**9**).

12. Engin de construction de fondations selon la revendication 11, dans laquelle ledit système de commande (**9**) est en outre configuré pour amener ledit engin de construction de fondations (**1**) à exécuter ladite au moins une fonction prédéterminée lorsque ledit système de commande (**9**) détecte ledit défaut.

13. Engin de construction de fondations selon l'une quelconque des revendications précédentes, comprenant en outre un couvercle (**30**) connecté mécaniquement à la structure supérieure (**3**), ledit au moins un capteur de présence (**20**) étant monté sous ou à l'intérieur dudit couvercle (**30**).

14. Engin de construction de fondations selon la revendication 13, dans lequel ledit couvercle (**30**) présente une ouverture latérale (**3**4) à travers laquelle un rayonnement électromagnétique émis par le au moins un capteur de présence (**20**) peut passer.

15. Engin de construction de fondations selon la revendication 14, dans lequel ledit couvercle (**30**) est équipé d'ailettes latérales (**31, 32, 33**).

16. Engin de construction de fondations selon la revendication 15, dans lequel lesdites ailettes latérales (**31, 32, 33**) sont pliables.

17. Engin de construction de fondations selon l'une quelconque des revendications précédentes, dans lequel ledit au moins un capteur d'accès (**10**) et/ou ledit au moins un capteur de présence (**20**) est configuré pour détecter la position d'un corps solide dans la région de surveillance respective.

18. Engin de construction de fondations selon la revendication 17, dans lequel ledit au moins un capteur d'accès (**10**) et/ou ledit au moins un capteur de présence (**20**) est un capteur de scanner laser.

19. Engin de construction de fondations selon l'une quelconque des revendications précédentes, dans lequel ledit au moins un capteur d'accès (**10**) et/ou ledit au moins un capteur de présence (**20**) présente une résolution spatiale variable.

20. Engin de construction de fondations selon l'une quelconque des revendications précédentes, dans lequel ledit au moins un capteur d'accès (**10**) et/ou ledit au moins un capteur de présence (**20**) présente un champ de vision variable.

21. Engin de construction de fondations selon l'une quelconque des revendications précédentes, dans lequel le signal de commande envoyé par ledit système de commande (**9**) est transmis via une convection à double canal.

22. Engin de construction de fondations selon l'une quelconque des revendications précédentes, dans lequel ledit système de commande (**9**) est configuré pour envoyer un signal de désactivation audit au moins un capteur d'accès (**10**) et/ou audit au moins un capteur de présence (**20**) afin de suspendre temporairement la détection de la présence d'un corps solide par ledit au moins un capteur d'accès (**10**) et/ou ledit au moins un capteur de présence (**20**).

23. Engin de construction de fondations selon l'une quelconque des revendications précédentes, dans lequel ledit système de commande (**9**) est configuré pour exécuter une mémorisation initiale des corps solides détectés par ledit au moins un capteur d'accès (**10**) et/ou ledit au moins un capteur de présence (**20**) dans la région de surveillance respective.

24. Engin de construction de fondations selon la revendication 23, dans lequel ledit système de commande (**9**) est configuré pour envoyer ledit au moins un signal de commande lorsque ledit au moins un capteur d'accès (**10**) et/ou ledit au moins un capteur de présence (**20**) détecte, dans la région de surveillance respective, un corps solide qui est différent des corps solides stockés précédemment pendant la mémorisation initiale.

25. Engin de construction de fondations selon l'une quelconque des revendications précédentes, qui inclut une pluralité de capteurs d'accès (**10**) et/ou une pluralité de capteurs de présence (**20**).

26. Procédé de commande d'un engin de construction de fondations (**1**) selon l'une quelconque des revendications 1 à 25, ledit engin de construction de fondations comprenant :
- un ensemble automoteur ou mobile (**2**) configuré pour se déplacer sur le sol, en déplaçant ainsi l'engin de construction de fondations (**1**) ;
- une structure supérieure (**3**), connectée mécaniquement audit ensemble automoteur ou mobile (**2**), équipée d'au moins un point d'accès prédéfini (**3A, 3B, 3D**) configuré pour permettre à une personne d'accéder à ladite structure supérieure (**3**), et équipée d'au moins une surface de passerelle (**7, 16, 18, 21**) ;
- un mât ou une flèche (**4**), connecté(e) mécaniquement à la structure supérieure (**3**), un équipement d'exploitation (**5**) étant configuré pour être monté sur celui-ci, afin de forer le sol ;
- au moins un capteur de présence (**20**) monté d'un seul tenant sur la structure supérieure (**3**), qui est orienté et configuré de manière à surveiller une région de surveillance d'un seul tenant avec ladite structure supérieure (**3**) et recouvrant ladite au moins une surface de passerelle (**7, 16, 18, 21**), ledit au moins un capteur de présence (**20**) étant configuré pour détecter la présence d'un corps solide dans ladite région de surveillance et pour envoyer un signal de détection représentatif de la présence dudit corps solide ;
- un système de commande (**9**) connecté de manière opérationnelle audit au moins un capteur de présence (**20**) ;
dans lequel ledit procédé comprend les étapes d'exploitation suivantes :
- ledit au moins un capteur de présence (**20**) détecte la présence d'un corps solide dans ladite région de surveillance ;
- ledit au moins un capteur de présence (**20**) envoie audit système de commande (**9**) un signal de détection représentatif de la présence dudit corps solide ;
- ledit système de commande (**9**) envoie au moins un signal de commande lorsque ledit signal de détection est représentatif de la présence d'un corps solide situé à proximité de ladite au moins une surface de passerelle (**7, 16, 18, 21**) ;
- ledit engin de construction de fondations (**1**) exécute au moins une fonction prédéterminée sur la base dudit au moins un signal de commande.

27. Procédé de commande d'une machine de construction de fondations (**1**) selon la revendication 26, dans lequel ladite structure supérieure (**3**) comprend en outre un poste de commande (**22**) destiné à recevoir un opérateur, de sorte que ce dernier puisse envoyer des commandes audit engin de construction de fondations (**1**) ; et
dans lequel ledit au moins un capteur de présence (**20**) ne détecte pas la présence de quelconques corps solides passant dans une zone à travers laquelle l'accès peut être obtenu audit poste de commande (**22**), ledit au moins un capteur de présence (**20**) étant monté et orienté sur ladite structure supérieure (**3**) d'une manière telle que ladite région de surveillance exclut des surfaces de passerelle à travers lesquelles ledit poste de commande (**22**) est accessible.
